(19) Europäisches Patentamt
European Patent Office
Office européen des brevets

(11) **EP 2 006 799 A2**

(12) **EUROPEAN PATENT APPLICATION**
published in accordance with Art. 153(4) EPC

(43) Date of publication:
**24.12.2008 Bulletin 2008/52**

(51) Int Cl.:
***G06Q 10/00*** *(2006.01)*

(21) Application number: **07740076.0**

(22) Date of filing: **28.03.2007**

(86) International application number:
**PCT/JP2007/056638**

(87) International publication number:
**WO 2007/116789 (18.10.2007 Gazette 2007/42)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **30.03.2006 JP 2006095333**

(71) Applicant: **Hitachi Chemical Company, Ltd. Tokyo 163-0449 (JP)**

(72) Inventor: **HONDA, Yutaka Hitachi Chemical Co., Ltd. Shinjuku-ku, Tokyo 163-0449 (JP)**

(74) Representative: **HOFFMANN EITLE Patent- und Rechtsanwälte Arabellastrasse 4 81925 München (DE)**

(54) **RISK MANAGEMENT SUPPORT SERVER AND JOB SUPPORT DEVICE**

(57)    A risk management support server possible of obtaining support information according to various viewpoints of risk management is provided. In client (4), a flow controller (111) displays information for selecting a field name by which support information of a temporary DB group (1300A) is classified. The client 4 informs the flow controller (111) of the selected field name. The flow controller (111) classifies pieces of the support information within the temporary DB group (1300A) for each same content using the informed field name. The flow controller (111) displays the pieces of the support information in the client (4), associated with each of the content.

FIG. 9

EP 2 006 799 A2

**Description**

Technical Field

The present invention relates to a risk management support server that supports risk management and a job support device that supports business operation.

Background Art

Business enterprises take various information on chemical substances into consideration, including grasping the current state, confirming the facts, and predicting the development. Then, the business enterprises draw up strategies to address the risks for preventing and responding to accidents. When risk management indexes are different, chemical substance-related risk management are differently carried out as corresponding to these different indexes. For example, a case is considered where a risk manager is higher order in office organization like field manger, group manager, chief, section chief, general manager, head of the office, department head, division president, various executive officers, various directors, president, chairperson, and auditor. In this case, the priority order varies from one placing a large emphasis on on-site treatment to another one placing a large emphasis on business strategies and management strategies of a business enterprise. In the conventional chemical substance-related risk management support, information obtained through business and information obtained from various systems, for example, information obtained through the Internet, are used. However, since necessary information is selected from a huge amount of information whose significance is not necessarily clear, the selection takes a long time.

In the business enterprise, selection and risk judgment on an obscure basis may be made. Such selection is, for example, selecting information based on experiences of a manager in charge. For that reason, situations where great time and cost are consumed have been caused. As the result, from a viewpoint of management strategies aiming at accident prevention and accident response, there is another problem that there is a high possibility of the chemical substance-related risk management being insufficient and obscure. The business enterprise needs to grasp changes in differences between the present conditions and targets, and to examine measures for improvement. However, the examination often has to be performed urgently in a haphazard way, whenever a problem occurs. Since flow check of related information and instructions is performed on the manpower base of the person in charge, huge cost and time are spent as a whole.

A technique related to the risk management has been described, for example, in Japan Patent Application Publication No. 2003-141344 and Japan Patent Application Publication No. 2005-157824.

Disclosure of the Invention

A first invention is a risk management support server of a risk management support server connected through a network to a risk management support information server including support information that supports risk management and also to a client that displays the support information, the risk management support server characterized by comprising: a distribution setup information storage that stores, in advance, distribution setup information associated with an element column in which elements are arranged in order of hierarchy, the hierarchy information, the elements selected respectively from each hierarchies of hierarchy information made of elements indicating viewpoints for supporting risk management; an element column generating unit that generates the element column in which elements selected respectively from the hierarchies of the hierarchy information by operation in the client are arranged in order of hierarchy; a distribution setup information acquisition unit that reads out the distribution setup information associated with the element column from the distribution setup information storage; a support information collector that collects support information corresponding to the distribution setup information read out from the support information included in the risk management support information server; and a support information display controller that transmits the collected support information to the client and makes the client display the collected support information.

According to the present invention, the support information corresponding to various viewpoints of risk management can be obtained.

A second invention according to the first invention is a risk management support server characterized by comprising: a risk judgment setting information storage that stores, in advance, risk judgment setup information associated with an element column elements are arranged in order of hierarchy, the elements selected respectively from hierarchies of hierarchy information made of elements indicating viewpoints for supporting risk management; a risk judgment setup information acquiring unit that reads the risk judgment setup information associated with the element column obtained by operation in the client from the risk judgment setting information storage; a risk judgment unit that performs risk judgment using the read risk judgment setup information and the collected support information; and a judgment result display controller that transmits a result of the risk judgment to the client and makes the client display the result of the risk judgment.

According to the present invention, results of the risk judgment corresponding to various viewpoints of risk management can be obtained.

A third invention according to the first or second invention is a risk management support server characterized in that in the distribution setup information, fields of a database are to be set, in which the support information to be collected by the distribution setup information is to be stored; the risk management support server further comprising a distribution setup information setting unit that retrieves information relevant to the element column to be associated with this distribution setup information in setting the fields, calculates a number of times of use in the retrieved information for every candidate of the fields, determines a priority of the candidate based on the number of times of use, and sets, into the distribution setup information, the candidate selected based on the priority.

According to the present invention, the distribution setup information suitable for the element column can be generated. Use of the suitable distribution setup information can enhance a value of the risk management.

A fourth invention according to any one of the first to third invention is a risk management support server characterized by further comprising a job support unit that operates based on one flow pattern showing a flow of a job or a flow pattern formed by combining two or more of the flow patterns, **characterized in that** the flow pattern includes a pattern element including at least any one of a judgment definition that is a definition of a judgment performed in the job and a processing definition that is a definition of a processing performed in the job; and the job support unit performs the judgment corresponding to the judgment definition included in the pattern element in order of the pattern element included in the flow pattern, and performs the processing corresponding to the processing definition included in the pattern element.

According to the present invention, the job support unit performs the judgment corresponding to the judgment definition included in the pattern element in order of the pattern elements included in the flow pattern, and performs the processing corresponding to the processing definition included in the pattern element. Thereby, a skill on the job becomes unnecessary, and accordingly, the job can be performed even by a person who is not an expert.

A fifth invention according to the fourth invention is a risk management support server **characterized in that** the job support unit is configured so that the flow pattern can be changed according to a request from a user involved in the job.

According to the present invention, since the job support unit allows change of the flow pattern, flexibility of the job can be increased, and change, modification, improvement, and updating of the job can be performed.

A sixth invention is a job support device characterized by comprising a job support unit that operates based on one flow pattern showing a flow of a job or a flow pattern formed by combining two or more of the flow patterns, the job support device characterized in that the flow pattern includes a pattern element including at least any one of a judgment definition that is a definition of a judgment performed in the job and a processing definition that is a definition of a processing performed in the job; and the job support unit performs the judgment corresponding to the judgment definition included in the pattern element in order of the pattern elements included in the flow pattern, and performs the processing corresponding to the processing definition included in the pattern element.

According to the present invention, the job support unit performs the judgment corresponding to the judgment definition included in pattern element in order of the pattern elements included in the flow pattern, and performs the processing corresponding to the processing definition included in the pattern element. Thereby, a skill not only on the risk management support but also on the job becomes unnecessary, and accordingly, the job can be performed even by a person who is not an expert.

A seventh invention according to the sixth invention is a job support device **characterized in that** the job support unit is configured so that the flow pattern can be changed according to a request from a user involved in the job.

According to the present invention, since the job support unit allows change of the flow pattern, flexibility of the job can be increased, and change, modification, improvement, and updating of the job can be performed.

An eighth invention is a computer program for causing the computer to function as a job support device characterized by comprising a job support unit that operates based on one flow pattern showing a flow of a job or a flow pattern formed by combining two or more of the flow patterns, characterized in that the flow pattern includes a pattern element including at least any one of a judgment definition that is a definition of a judgment performed in the job and a processing definition that is a definition of a processing performed in the job; and the job support unit performs the judgment corresponding to the judgment definition included in the pattern element in order of the pattern elements included in the flow pattern, and performs the processing corresponding to the processing definition included in the pattern element.

According to the present invention, the job support unit performs the judgment corresponding to the judgment definition included in the pattern element in order of the pattern elements included in the flow pattern, and performs the processing corresponding to the processing definition included in the pattern element. Thereby, a skill not only on risk management support but on the job becomes unnecessary, and accordingly, the job can be performed even by a person who is not an expert.

Brief Description of the Drawings

[Fig. 1] Fig. 1 is a configuration diagram of a risk management support system of an embodiment.
[Fig. 2] Fig. 2 is a configuration diagram of a DB server 11. [Fig. 3] Fig. 3 is a diagram that illustrates a storage 13.
[Fig. 4] Fig. 4 is diagram that illustrates a support information DB group 2000.
[Fig. 5] Fig. 5 is a diagram that illustrates a distribution setup information group 1351a.
[Fig. 6] Fig. 6 is a diagram that illustrates a distribution setup information group 1351b.
[Fig. 7] Fig. 7 is a diagram that illustrates a risk judgment setup information group 136.
[Fig. 8] Fig. 8 is a diagram that illustrates a risk judgment setup information group 136.
[Fig. 9] Fig. 9 is a diagram showing the example of the operating sequence of a risk management support system 100.
[Fig. 10] Fig. 10 is a diagram showing an example of an operating sequence of the risk management support system 100.
[Fig. 11] Fig. 11 is a diagram that illustrates distribution setup information 1351M before change.
[Fig. 12] Fig. 12 is a diagram that illustrates the distribution setup information 1351M after change.
[Fig. 13] Fig. 13 is a diagram that illustrates the distribution setup information 1351M after change.
[Fig. 14] Fig. 14 is a diagram that illustrates the distribution setup information 1351M after change.
[Fig. 15] Fig. 15 is a diagram that illustrates the distribution setup information 1351M after change.
[Fig. 16] Fig. 16 is a diagram that illustrates a judgment result classification table 13604.
[Fig. 17 ] Fig. 17 is a diagram that illustrates a totaled result. [Fig. 18] Fig. 18 is a diagram that illustrates a judgment result classification table 13604.
[Fig. 19] Fig. 19 is a diagram that illustrates a totaled result. [Fig. 20] Fig. 20 is a configuration diagram of a pattern element.
[Fig. 21] Fig. 21 is a configuration diagram of a flow pattern. [Fig. 22] Fig. 22 is a diagram showing a group made of a flow pattern 311 including four pattern elements 310.
[Fig. 23] Fig. 23 is a diagram that illustrates a flow pattern used in a risk judgment job.
[Fig. 24] Fig. 24 is a diagram that lists a flow of a processing that may be performed according to the flow pattern of Fig. 23. [Fig. 25] Fig. 25 is a diagram that illustrates conditional expressions that can be included in a flow pattern.
[Fig. 26] Fig. 26 is a diagram that illustrates a flow pattern used in a data collection job.
[Fig. 27] Fig. 27 is a diagram that lists a flow of a processing that may be performed according to the flow pattern of Fig. 26. [Fig. 28] Fig. 28 is a diagram showing a part of the flow pattern shown in Fig. 26.
[Fig. 29] Fig. 29 is a diagram that illustrates a flow pattern used in a disclosure right setting job.
[Fig. 30] Fig. 30 is a diagram that lists a flow of a processing that may be performed according to the flow pattern of Fig. 29. [Fig. 31] Fig. 31 is a diagram showing a formula for calculating a level of disclosure to a user.

Best Mode for Carrying Out the Invention

Hereinafter, embodiments of the invention will be described with reference to the drawings.

[First embodiment]

A risk management support system according to the embodiment is configured to obtain support information that supports risk management according to various viewpoints of risk management. While the support information is chemical substance-related information here, the support information that supports risk management in other fields may be used.

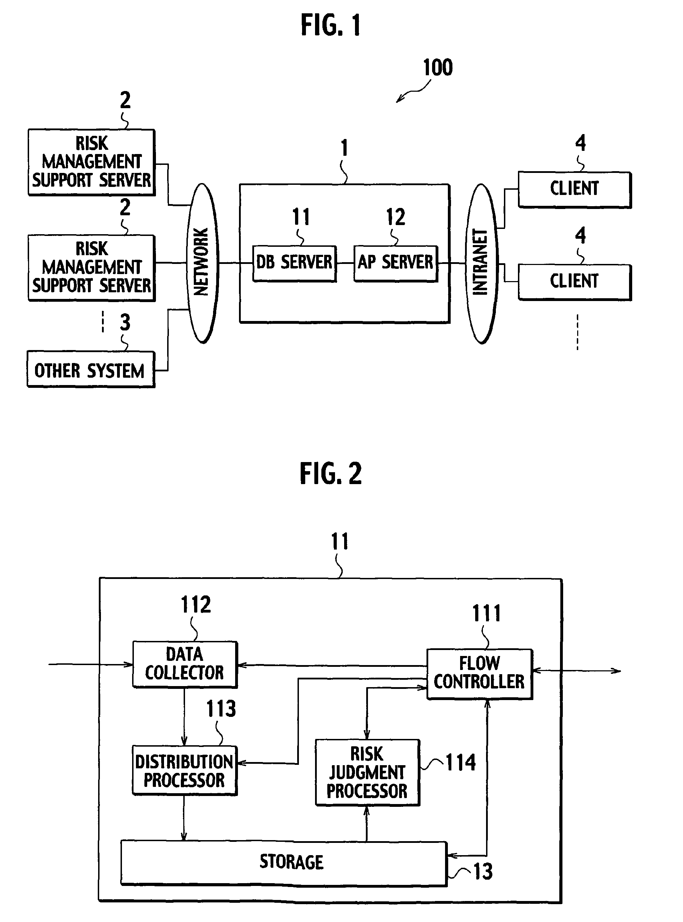

Fig. 1 is a configuration diagram of the risk management support system according to the embodiment.
As shown in Fig. 1, the risk management support system 100 includes: a risk management support server 1; a plurality of risk management support information servers 2 connected to the risk management support server 1 through a network; a group of computers and databases (hereinafter, this group of computers and databases is collectively referred to as "other system 3"); and a plurality of clients 4 connected to the risk management support server 1 through an intranet. Hereinafter, the database is abbreviated to DB.
Each risk management support information server 2 is a computer that provides the support information (chemical substance-related information) that the risk management support information server 2 has to the risk management support server 1. The risk management support information servers 2 are independent from or in cooperation with one another. For example, a material information management system, a procurement management system, a customer information management system, a product information management system, a sales management system, product structure management systems such as BOM, production control systems such as SCN, a chemical substance information management system, a disclosed information creation/updating/distribution management systems such as MSDS, a chemical substance risk information management system, an environmental preservation information management system, a safety information management system, an environmental accounting management system, etc. correspond to the risk management support information server 2.

The other system 3 provides various kinds of support information, i.e., chemical substance-related information, (MSDS information, non-inclusion guarantee information, content report information, etc.) to the risk management support server 1 in a form of data groups, such as documents, spreadsheets, and image information.

The chemical substance-related information (support information) is chemical substance information, laws-and-regulations information, procurement information, process information, management information, product information, shipping information, accident information, environmental accounting information, etc.

The chemical substance information is: chemical substance name information such as IUPAC names, common names, alias names, and popular names; molecular structure formula information such as a molecular formula, a rational formula, and a general formula; molecular weight group name information such as low molecular materials, oligomer materials, and high-polymer materials; material composition group name information such as inorganic materials, organic materials, composite materials, graded materials, nanomaterials, and high-polymer materials; high-polymer system information such as amide system polymers, imide system polymers, ester system polymers, ether system polymers, silicon system polymers, boron nitride system polymers, and liquid crystal polymers; high-polymer structure system information such as random structure high polymers, graft structure high-polymers, block structure high polymers, and starburst structure high polymers; physical properties information such as gas, powder, granule, solid-state, glassy solid, crystallinity, liquid crystallinity, light transmittance, refractivity, adhesiveness, solubility, melting nature, collapsibility, degradability, hygroscopicity, deliquescence, acidity, basicity, neutrality, Lewis acidity, Lewis basicity, covalent bonding nature, coordinate bonding nature, ionic bonding nature, electron emission nature, electron withdrawing nature, electrostatic nature, paraelectricity, ferroelectricity, antiferroelectricity, fluorescence, phosphorescence nature, luminescence, and radioactivity; chemical properties information or functional information; management numbers such as CAS number, laws-and-regulations management numbers, vendor company registration management numbers, manufacturer registration management numbers, and public office management number low; safety information such as suction toxicity, aspiration toxicity, contact toxicity, hepatotoxicity, nephrotoxicity, mutagenicity, and carcinogenicity; exposure hazardous property information; living organism toxicity information; living body toxicity information; ecological toxicity information; environmental toxicity information; environmental impact information; danger information; handling method information such as personal protective equipment, safety facilities, safety work manuals, reclamation manuals, and discarding treatment manuals; and component information such as moisture content, and contained impurities, etc.

The laws-and-regulations information is names of laws and regulations, operation areas, regulation targets, exemption, regulation period, a regulation control value, penal regulations, circumstances, trend information, related laws-and-regulations information, etc.

The procurement information is: production related information such as vender name, manufacturer name, product number, serial number, production line number, and name of production business establishment, country of manufacture, and production date; procurement management information such as amount of supply, total amount of supply, supply case number, procurement manager name, procurement path, and procurement plan; information disclosure related information such as contained chemical substance information on a procured item, MSDS, label, usage description, safety description, technical explanation, non-use guarantee, non-inclusion guarantee, process guarantee, management system guarantee, and procurement management reliability, etc.

The process information is: manufacturing process information such as raw material, solvent, catalyst, co-catalyst, reaction name, reaction formula, side reaction formula, by-product, possibility of impurities mixing, yield, recovery, amount of production energy, waste volume, amount of exhaust air, environmental impact information, and manufacturing machine name; manufacturing machine related information such as components material and component parts; manufacturer information; process management method; process management reliability, etc.

The management information is: project information such as business plan, manufacture plan, production plan, and sales plan; process management information such as design, manufacture, production, evaluation, guarantee of quality, shipment, and transportation; evaluation management information such as handling methods, exposure/contamination prediction, leak/outflow prediction, pollution influence prediction, safety, hazardous properties, and risks; regulation and the like response management information such as application, notice, report, and registration; information flow; management time; management plan, etc.

The product information is: manufacture related information such as manufacturer name, product number (product identification information), serial number, production line number, name of manufacture business establishment, manufacture drawings, and manufacture date; composition related information such as contained chemical substance information on compositions, components, members, contained impurities, and products; information disclosure related information including MSDS, label, exposure scenario, chemical safety report, usage description, safety description, technical explanation, non-use guarantee, non-inclusion guarantee, process guarantee, management system guarantee, and product control reliability, etc.

The shipping information is vender name, operator name, distributor name, shipping period, shipping warehouse, shipping port, shipping airport, customer name, amount of shipment, total amount of shipment, shipment case number, transshipment place, transshipper, distribution route, destination, application, name of shipping administrator, shipment management reliability, shipment plan, etc.

The accident information is: accident related information which is information on accident occurred in operation such as procurement, design, manufacture, production, evaluation, sale, transportation, reclamation, disposal, recycling, reuse; accident related information on use, application, and incorporation, etc.

The environmental accounting information is various responding costs based on environmental impact such as working efficiency, yield, manufacturing efficiency, mass balance, ecological risks, and environment risks; environmental accounting information management reliability, etc.

The risk management support server 1 is configured by connecting two computers, i.e., a DB server 11 and an application server 12 (hereinafter, AP server) through a transmission line.

Each client 4 is a computer operated by risk managers, risk management documentation creators, document users, administrators of each section, executive officers, etc. Each client 4 includes a browser. When the AP server 12 transmits information to the client 4, the browser displays a web screen including thus transmitted information on a display unit (not shown) connected to the client 4. Communication between the AP server 12 and the browser is performed with the HTTP (Hyper Text Transfer Protocol).

As shown in Fig. 2, the DB server 11 includes a flow controller 111, a data collector 112, a distribution processor 113, and a risk judgment processor 114. A DB (database) is stored in a storage of the DB server 11. Hereinafter, this database is referred to as a storage 13.

The flow controller 111 makes the data collector 112, the distribution processor 113, and the risk judgment processor 114 perform processes, while processes other than that are performed by the flow controller 111. The flow controller 111 appends related information, such as processing request number, processing time, and reference number, to a processed result, and subsequently, stores the processed result in the storage 13. Thus, history control of each processing result is made possible.

Although not shown, the AP server 12 includes a processor for transmitting an E-mail, etc. to each client 4. When detecting an abnormal result based on a setting, the DB server 11 transmits a caution notice such as a caution mail or an alarm signal, to the client 4 of the risk manager through the AP server 12. Here, an information management responsibility system (system on an office organization from the risk manager to the executive officer) and an information flow route (system of an information flow from the risk manager to each section administrator) are displayed in association with transmission time and receipt time of the caution notice such as the caution mail or the alarm signal.

Here, the abnormal result is a state that reaches a risk boundary judgment that have been set in advance, such as expiration of a term, excess of threshold, increase of throughput, deterioration of safety, which is linked with job risks such as delay and stop of a business or processing.

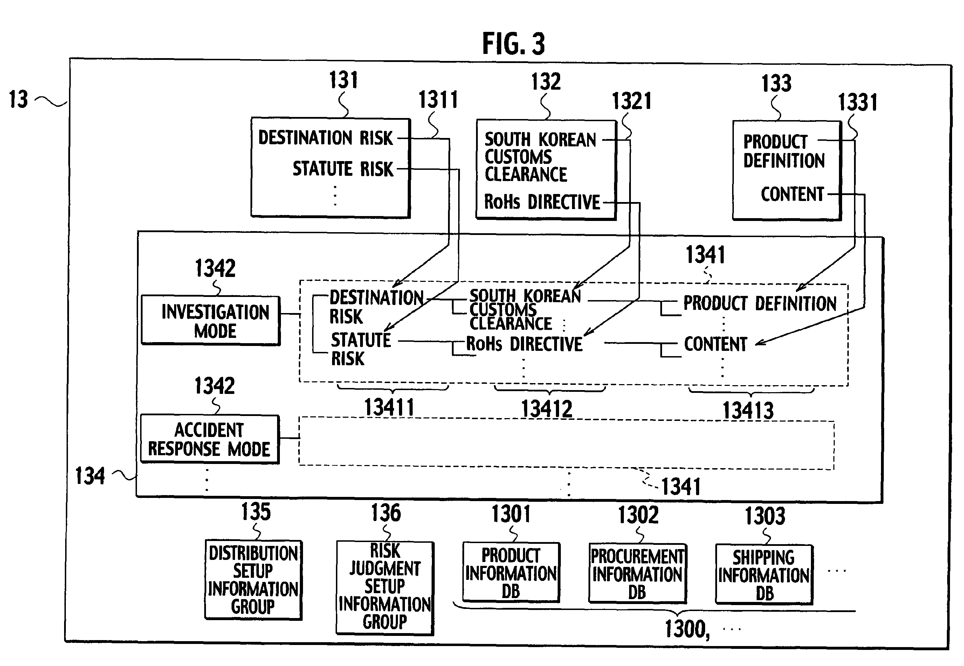

Fig. 3 is a diagram that illustrates the storage 13.

The storage 13 includes: a management risk information group 131 including management risk information; a management range information group 132 including management range information; a management level information group 133 including management level information; a hierarchy information group 134 including hierarchy information 1341; a distribution setup information group 135 including distribution setup information; and a risk judgment setup information group 136 including risk judgment setup information. The distribution setup information group 135 is stored in a distribution setup information storage, which is not shown, within the storage 13. The risk judgment setup information group 136 is stored in a risk judgment setting information storage, which is not shown, of the storage 13.

It is preferable to include a dictionary accumulating conversion definitions for converting character string information used as basis for a risk judgment into a combination of other symbol information. Other symbol information includes an alphabet, numerals, Roman numerals, Greek numbers, kana, hiragana and the like. Accordingly, it becomes possible to improve flexibility in response to arbitrary changes and registration of a risk judgment logical formula.

The management risk information (hereinafter, referred to as management risk information 1311) that forms the management risk information group 131 is embodied in words, such as destination risks, statute risks, voluntary management risks, application risks, component risks, restriction value risks, and process risks.

The management range information (hereinafter, referred as to management range information 1321) that forms the management range information group 132 is embodied in words, such as: destination range information according to a country or an area, such as South Korean customs clearance, China export and import, and EU trade; statute range information on laws, regulations, treaty, government ordinance, ministerial ordinance, etc., including RoHS Directive, REACH regulation, EuP Directive, South Korean Toxic Chemicals Control Law, Act on the Evaluation of Chemical Substances and Regulation of Their Manufacture, etc., trade control act, GHS, and the Stockholm Convention (POPs), and operation management information on them; voluntary management range information such as information on chemical substance registration management, gray-zone management, management according to a customer, management according to a business establishment, and management according to a business group; management range information according to application, such as information on management according to application, management according to a method in use, management according to abandonment methods; component management range information such as information on product composition chemical substance management and contained chemical substance management; restriction value management information according to an object system, such as information on water system restriction value management, atmosphere system restriction value management, and soil system restriction value management; process management range information such as information on manufacturing process management, pretreatment process management, and post treatment process control.

The management level information (hereinafter, referred to as management level information 1331) that forms the management level information group 133 is embodied in words, such as: management level information according to an object, such as information on product definition, content, total amount of shipping, and total amount of receiving; management level information according to an affiliation, such as information on position, rank, office organization, section, business establishment, project, workgroup, subcommittee, and committee, etc.

The hierarchy information group 134 includes hierarchy information 1341 as shown in Fig. 3. Mode information 1342 that has modes, such as "investigation mode," "consultant mode," "accident associated mode," "prevention associated mode," "supervision mode," "accident response mode", and "business management mode," is given to the hierarchy information 1341. The hierarchy information 1341 has a structure according to the given mode information 1342 so that the risk management corresponding to the management level information obtained from the management level information group 133 can be performed.

The "investigation mode" is selected, for example, when creating disclosed information, investigation information or the like from all information within a company group.

The "consultant mode" is selected in order to perform consulting service within a company and consulting service by others introducing or using the present system.

The "accident associated mode" is selected, when providing priority for outputs needed at the time of emergency, by assuming a hypothetical accident, the outputs include risk items, a risk degree, investigation items (related procured items, intermediate items, products, section names, procurement destination names, customer name, etc.), necessary input resources (staff, arrangement, time, cost, etc.), responsive plan decision, term setting, arrangements (related sections and departments, sections and departments to communicate with, communication means, etc.), instruction items, countermeasures and expected values of the results and the like.

The "prevention associated mode" is selected when providing priority for the above-mentioned outputs needed for avoiding an accident risk.

The "audit mode" is selected in order to provide the outputs that need improvement, together with a priority, and to enable response to the self-audit and audit by others.

The "accident influencing mode" is selected in order to perform a job of risk response when a major accident occurs, job responding to an area of influence within a business establishment, influence on production, related procurement destinations, affiliated companies, customers and the like.

The "business management mode" is selected in order to perform risk management, such as prevention of incomplete work, progress management, period management, and information development in routine jobs, non-routine jobs, requesting jobs and the like.

Each element of an element group that forms a first hierarchy 13411 of the hierarchy information 1341 is the management risk information 1311 selected from the management risk information group 131. Each element of an element group that forms a second hierarchy 13412 of the hierarchy information 1341 is the management range information 1321 selected from the management range information group 132, and is associated with any one of the elements of the first hierarchy 13411. Each element of an element group that forms a third hierarchy 13413 of the hierarchy information 1341 is the management level information 1331 selected from the management level information group 133, and is associated with any one of the elements of the second hierarchy 13412.

A product information DB 1301, a procurement information DB 1302, a shipping information DB 1303 and the like are temporarily generated in the storage 13. An arbitrary DB within such a DB group is referred to as a temporary DB 1300.

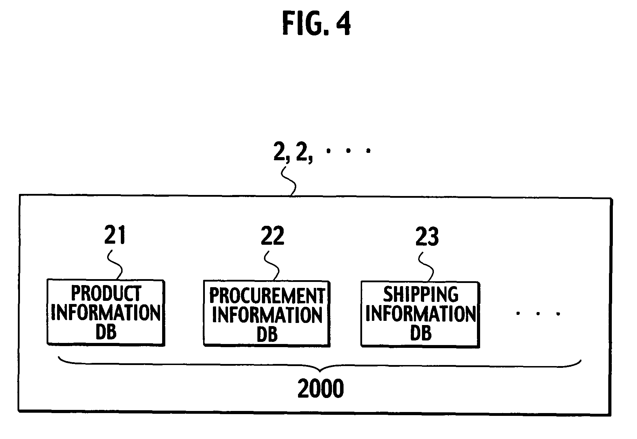

As shown in Fig. 4, similar product information DB 21, procurement information DB 22, shipping information DB 23 and the like are provided in any one of the risk management support information servers 2. Such a DB group is referred to as a support information DB group 2000.

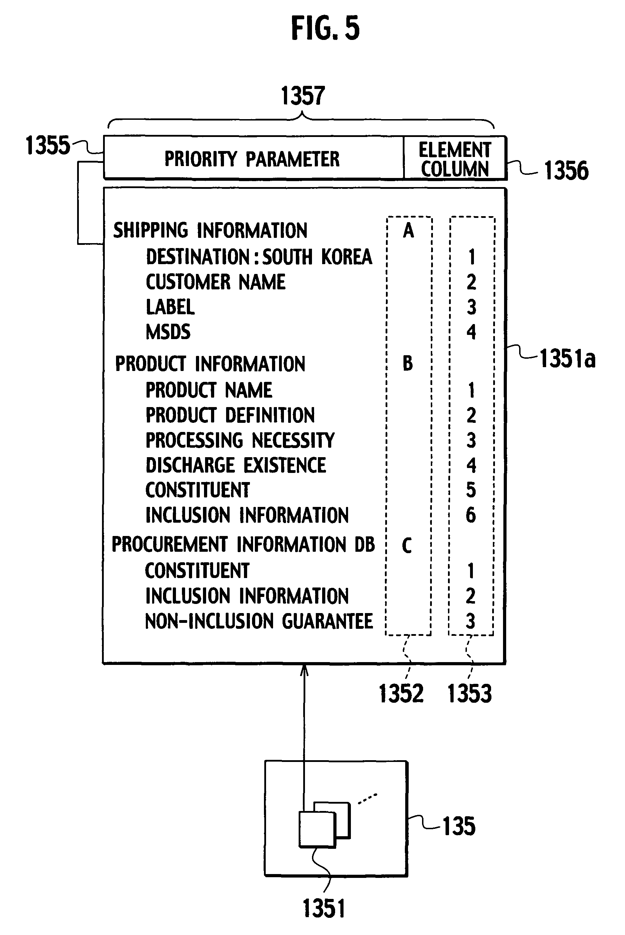

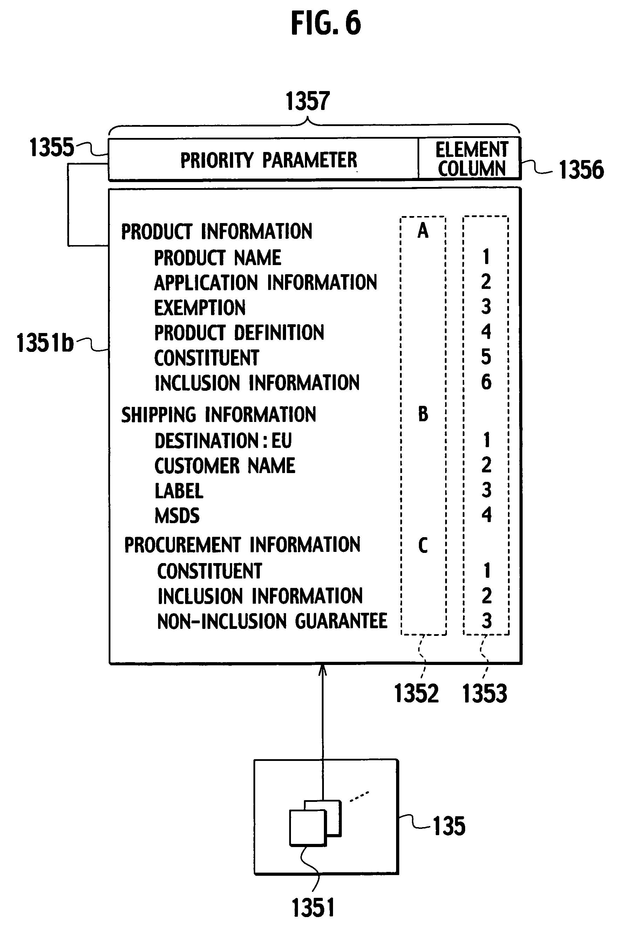

Fig. 5 and Fig. 6 are diagrams that each illustrates a distribution setup information group 135.

As shown in Fig. 5, distribution setup information 1351 that forms the distribution setup information group 135 determines a distribution destination and conditions when distributing the support information, which is collected from the support information DB group 2000, to each temporary DB 1300. For example, it is shown in Fig. 5 that distribution setup information 1351a has settings of destination within the shipping information, and this distributes the support information to a field of the destination of the shipping information DB 1303. It is also shown that a setting of South Korea is associated with a setting of the destination, and this distributes the support information on "South Korea" to the field of the destination. Accordingly the distribution setup information 1351a of Fig. 5 distributes the support information to the field of the destination of the shipping information DB 1303, to the field of the product name of the product information DB 1301, to the field of the constituent of the procurement information DB 1302, and so on, and at that time, determines to distribute the support information on "South Korea" to the field of the destination.

The distribution setup information 1351a shown in Fig. 5 is an example of the information used in a processing of Example 1 (example in which "destination risk" of the management risk information 1311 is selected) that will be described later. Distribution setup information 1351b shown in Fig. 6 is an example of the information used in a processing of Example 2 (example in which "statute risk" of the management risk information 1311 is selected) that will be described later.

In addition, the distribution setup information 1351 is associated with priority information 1357 in order to retrieve the distribution setup information 1351 from the distribution setup information group 135. The distribution setup information 1351 has a structure according to the priority information 1357. The priority information 1357 is made of a priority parameter 1355 and an element column 1356. Here, the priority parameter 1355 is one of priority parameters in a priority parameter group formed from a priority parameter 1355 showing the highest priority (for example, "1" which indicates the highest level of five stages) to a priority parameter 1355 showing the lowest priority (for example, "5" which indicates the lowest level of five stages). On the other hand, in the element column 1356, the elements selected from each hierarchy (first hierarchy 13411, second hierarchy 13412, and third hierarchy 13413) of the same hierarchy information 1341 are arranged in order of hierarchy.

Furthermore, a database priority 1352 and a field priority 1353 are set in the distribution setup information 1351. In short, A (first rank), B (second rank), C (third rank), and so on (from high rank to low rank) are set as the database priority 1352. Furthermore, 1 (first rank), 2 (second rank), and 3 (third rank) and so on (from high rank to low rank) are set as the field priority 1353. Thereby, the database corresponding to the database priority 1352 not less than predetermined rank and the field corresponding to the field priority 1353 not less than predetermined rank can be selected.

Although not shown, acquisition source information that shows an acquisition source of the support information distributed according to this distribution setup information 1351 is associated with the distribution setup information 1351. The acquisition source information is associated with this distribution setup information 1351, and is stored in the storage 13. The acquisition source information shows, for example, a route bridging across a plurality of different databases, and is set using the so-called SQL sentence.

Furthermore, although not shown, each product information of the product information DB 21 includes a product name of a product corresponding to the product information, a product group name that shows a product group to which the product belongs, and product identification information (hereinafter, identification information is referred to as an ID) that indicates the product. Each product ID includes a product group ID by which the product group is indicated. Furthermore, a conversion definition for converting the product group ID of the product information DB 21 into a product group ID of the product information DB 1301 is set in the above-mentioned dictionary.

The dictionary also stores a conversion definition for converting the information in the risk management support information server 2 into the information in the risk management support server 1.

In the risk management support system 100, a setting using the distribution setup information 1351 that forms the distribution setup information group 135 is referred to as a standard setting. On the other hand, a setting using a setting changed from the standard setting is referred to as an optional setting.

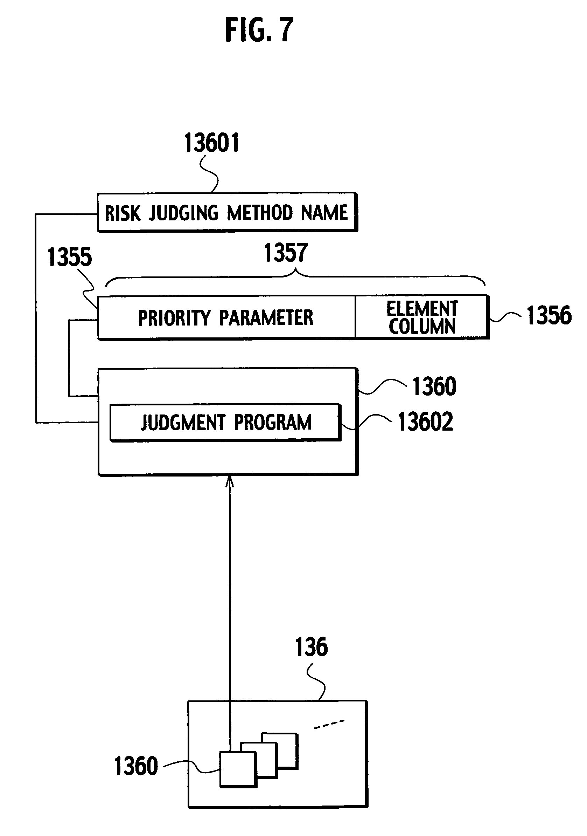

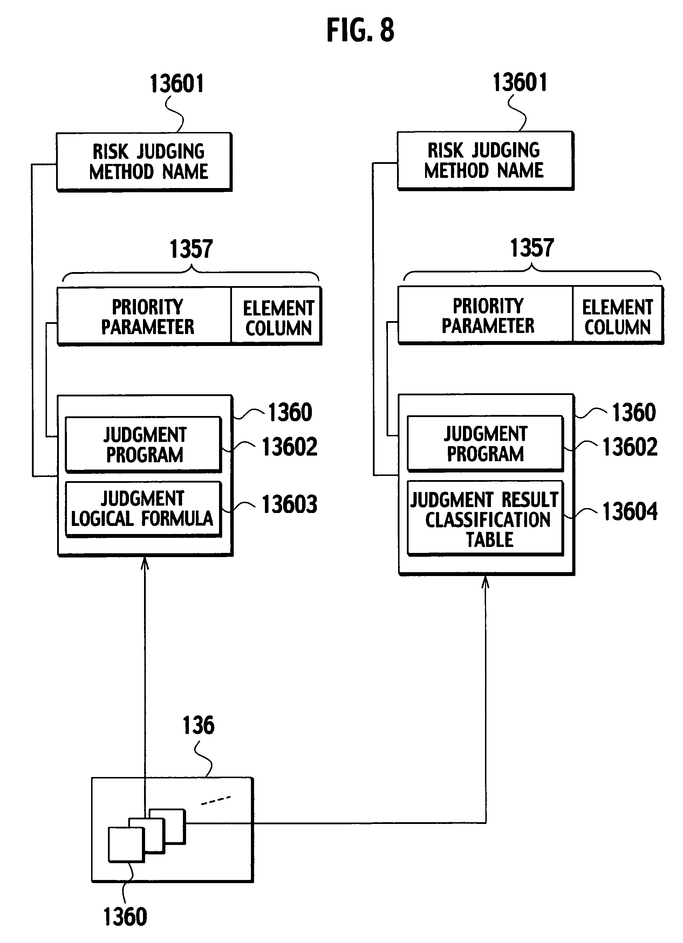

Fig. 7 and Fig. 8 are diagrams that illustrate the risk judgment setup information group 136.

As shown in Fig. 7, risk judgment setup information 1360 that constitute the risk judgment setup information group 136 is associated with the priority information 1357 in order to retrieve the risk judgment setup information 1360 from the risk judgment setup information group 136. The risk judgment setup information 1360 is associated with a risk judging method name 13601 in order to select the risk judgment setup information 1360. The priority information 1357 is constituted of the priority parameter 1355 and the element column 1356. Here, the priority parameter 1355 is a priority parameter in a priority parameter group formed from a priority parameter 1355 showing the highest priority to a priority parameter 1355 showing the lowest priority. On the other hand, in the element column 1356, the elements selected from each hierarchy (first hierarchy 13411, second hierarchy 13412, and third hierarchy 13413) of the same hierarchy information 1341 are arranged in order of hierarchy. Moreover, the risk judgment setup information 1360 includes a judgment program 13602 according to the priority information 1357.

As shown in Fig. 8, the risk judgment setup information 1360 may include a judgment logical formula 13603 and a judgment result classification table 13604 according to the judgment program 13602.

Although not shown, the flow controller 111 includes an element column generating unit that generates the element column in which the elements that are selected, by operation in the client 4, from each hierarchy of the hierarchy information 1341 stored in the storage 13 are arranged in order of hierarchy; a distribution setup information acquiring unit that reads the distribution setup information associated with the element column from a distribution setup information storage; and a support information display controller that transmits, to the client 4, the support information collected according to the distribution setup information and makes the client 4 display the information.

The flow controller 111 also includes a risk judgment setup information acquiring unit that reads, from a risk judgment setting information storage, the risk judgment setup information associated with the generated element column, and a judgment result display controller that transmits the result of the risk judgment to the client 4 and makes the client 4 display the result.

The data collector 112 includes a support information collector that collects the support information according to the read distribution setup information in the support information stored in the risk management support information server 2.

The risk judgment processor 114 includes a risk judging unit that performs a risk judgment using the read risk judgment setup information and the collected support information.

(Operation of risk management support system 100)

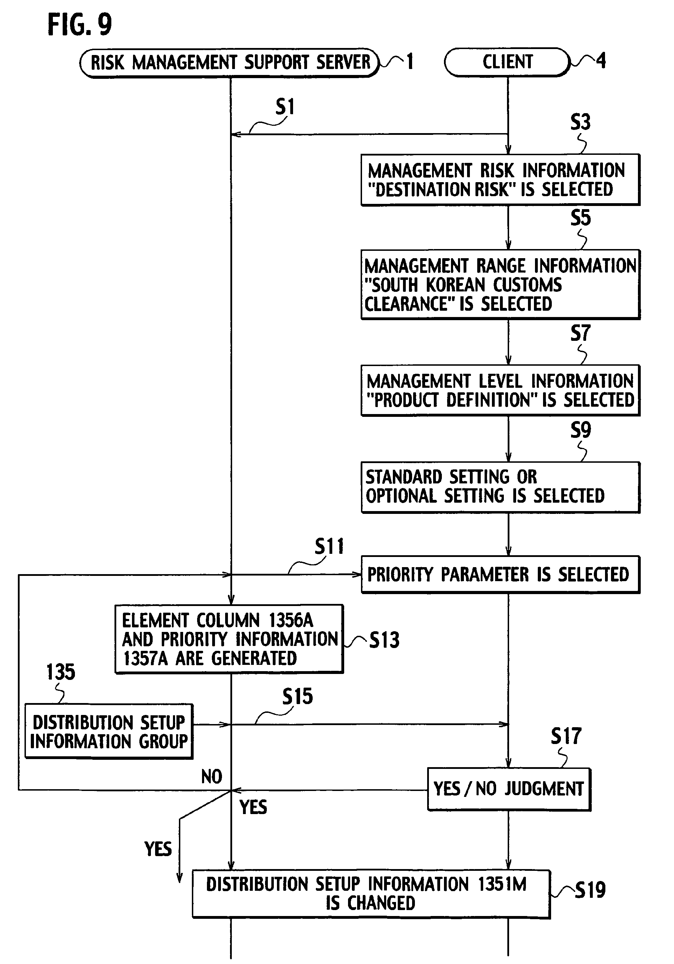

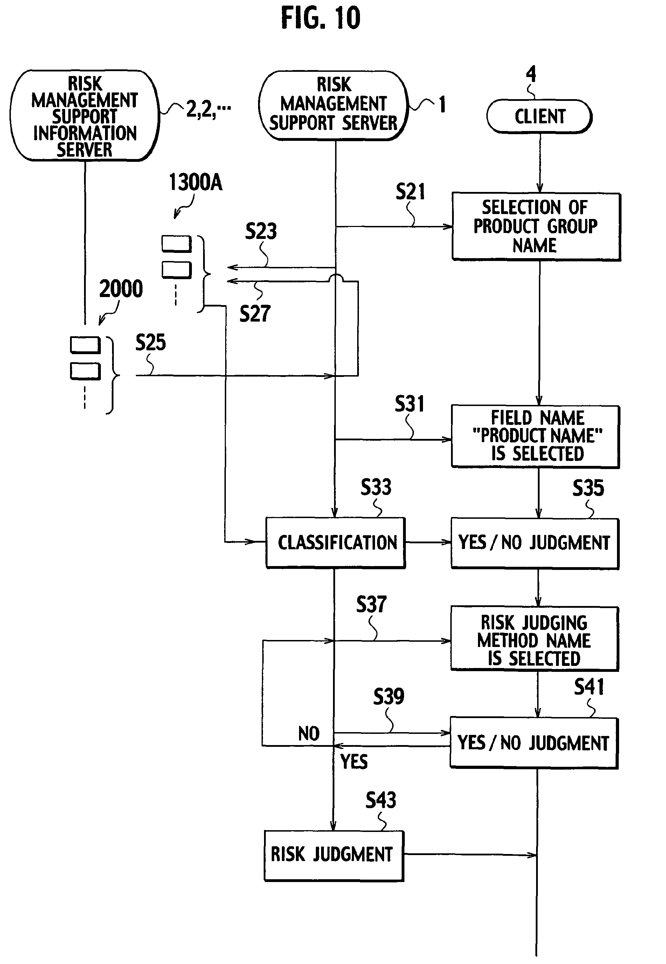

Fig. 9 and Fig. 10 are diagrams showing an example of an operating sequence of the risk management support system 100.

Operation of a risk judgment request is performed by any one of the client 4 (hereinafter, simply referred to as the client 4) in Fig. 9. Thereby, the client 4 performs a risk judgment request to the AP server 12 (S1). The AP server 12 informs the flow controller 111 in the DB server 12 of this risk judgment request.

The flow controller 111 gives the mode information group including the mode information 1342, such as "investigation" as shown in Fig. 3, to the AP server 12. Then, the AP server 12 transmits the mode information group to the client 4, and makes the client 4 display this. Thereby, operation to select any one of a piece of the mode information 1342 is performed. The client 4 informs the flow controller 111 of the selected piece of the mode information 1342 through the AP server 12.

The flow controller 111 makes the client 4 display an element group (group that is made of the management risk information 1311) that forms the first hierarchy 13411 of the hierarchy information 1341 to which the informed mode information 1342 is given (referred to as hierarchy information 1341A). Thereby, any one of a piece of the management risk information 1311 (for example, "destination risk") is selected (S3). The client 4 informs the flow controller 111 of the selected piece of the management risk information 1311 (referred to as management risk information 1311A) through the AP server 12.

The flow controller 111 makes the client 4 display an element group (group that is made of the management range information 1321) that forms the second hierarchy 13412 of the hierarchy information 1341A and is associated with the management risk information 1311A. Thereby, any one of the piece of the management range information 1321 (for example, "South Korean customs clearance") is selected (S5). The client 4 informs the flow controller 111 of the selected piece of the management range information 1321 (referred to as management range information 1321A) through the AP server 12.

The flow controller 111 makes the client 4 display an element group (group that is made of the management level information 1331) that constitute the third hierarchy 13413 of the hierarchy information 1341A and associated with the management range information 1321A that is associated with the management risk information 1311A. Thereby, any one of a piece of the management level information 1331 (for example, "goods definition") is selected (S7). The client 4 informs the flow controller 111 of the selected piece of the management level information 1331 through the AP server 12.

The flow controller 111 makes the client 4 display information for selecting the standard setting or the optional setting. Thereby, either of the settings is selected (S9). The client 4 informs the flow controller 111 of the selected result through the AP server 12. Alternatively, the flow controller 111 may select the setting, transmit the selected result to the client 4, and make the client 4 display the selected result, and then, a user of the client 4 may confirm this.

The flow controller 111 makes the client 4 display information for selecting any one of the priority parameters 1355 out of the group made of the priority parameters 1355 described in Fig. 5, etc. (S11). Thereby, the priority parameter 1355 is selected. The client 4 informs the flow controller 111 of the selected priority parameter 1355 (referred to as a priority parameter 1355A) through the AP server 12.

The flow controller 111 generates an element column (referred to as an element column 1356A) in which the management risk information 1311A, the management range information 1321A, and the management level information 1331A are arranged in this order (S13). The flow controller 111 generates priority information 1357 (referred to as priority information 1357A) made of the priority parameter 1355A and the element column 1356A (S13).

Alternatively, the generation process may be omitted by storing this element column 1356A and priority information 1357A in the storage 13 for the user who uses the client 4 and an organization to which the user belong, and reading the element column 1356A and the priority information 1357A on demand.

The flow controller 111 reads the distribution setup information 1351 associated with the priority information 1357A (referred to as distribution setup information 1351M) from the distribution setup information group 135, and makes the client 4 display this (S15). Thereby, operation of a yes/no judgment is executed as to whether to use the distribution setup information 1351M (S17). The client 4 informs the flow controller 111 of the judgment result through the AP server 12.

At S15, when elements within the element column 1356A in the priority information 1357A and the order of the elements are identical to elements within element column 1356 associated with the distribution setup information 1351 and the order of the elements, the priority information 1357A and the distribution setup information 1351 are associated with each other. Alternatively, at Step S15, identity may be determined only based on a combination of the elements, without taking the order into consideration.

The flow controller 111 returns the control to S11 when the distribution setup information 1351M is denied in the judgment result.

When the distribution setup information 1351M is affirmed in the judgment result and the optional setting is informed, the distribution setup information 1351M is changed at this time (S19). On the other hand, such a change is not made when the distribution setup information 1351M is affirmed in the judgment result and the standard setting is informed.

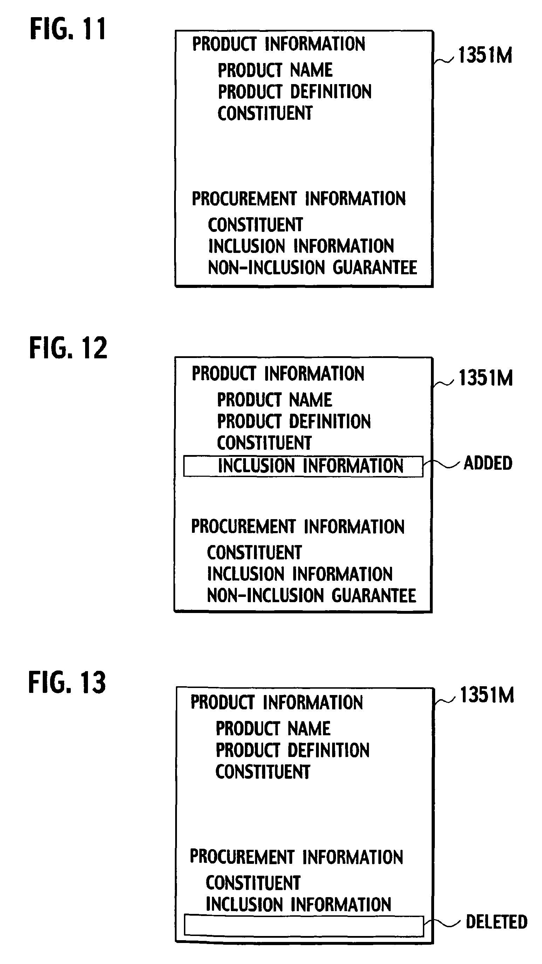

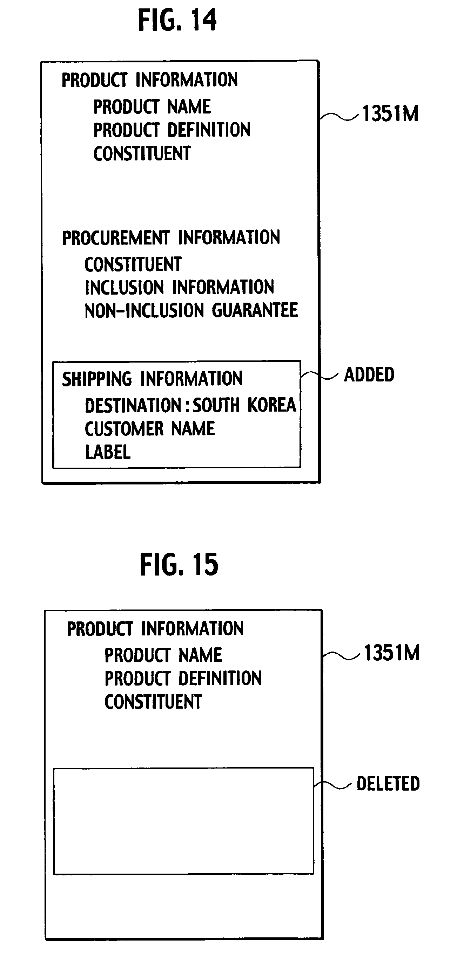

At S19, for example, the flow controller 111 changes the distribution setup information 1351M shown in Fig. 11 to the distribution setup information 1351M shown in Fig. 12 by communication with the client 4. Alternatively, the flow controller 111 changes the distribution setup information 1351M shown in Fig. 11 to the distribution setup information 1351M shown in Fig. 13. Alternatively, the flow controller 111 changes the distribution setup information 1351M shown in Fig. 11 to the distribution setup information 1351M shown in Fig. 14. Alternatively, the flow controller 111 changes the distribution setup information 1351M shown in Fig. 11 to the distribution setup information 1351M shown in Fig. 15.

The changed distribution setup information 1351M may be stored in the storage 13 for the user who uses the client 4 and the organization to which the user belongs, and used by reading it out on demand.

Going to Fig. 10, the flow controller 111 makes the client 4 display information for selecting a product group name (S21). Thereby, the product group name is selected. The client 4 informs the flow controller 111 of the product group name through the AP server 12.

The flow controller 111 generates a temporary DB 1300 (referred to as a temporary DB group 1300A as a whole) according to the distribution setup information 1351M (S23). This temporary DB group 1300A is empty.

Next, according to an instruction of the flow controller 111, the data collector 112 reads out the acquisition source information associated, in advance, with the distribution setup information 1351M from the storage 13. Then, the data collector 112 collects the support information within the support information DB group 2000 from each risk management support information server 2 based on the acquisition source information (S25).

Next, according to an instruction of the flow controller 111, the distribution processor 113 distributes the collected support information to each field of each temporary DB of the temporary DB group 1300A according to the distribution setup information 1351M (S27).

First, the distribution processor 113 converts a product group ID included in a product ID that the collected product information includes into the product group ID of the product information DB 1301 by a conversion definition. Then, the distribution processor 113 executes distribution to the product information DB 1301, only when the converted product group ID coincides with the product group ID that shows the informed product group name at S21.

In the risk management support server 1, not only conversion of the product group ID is preformed, but the collected support information are converted into information that can be processed by the risk management support server 1, using other conversion definitions such as form conversion definitions, language translation codes, unit conversion codes, and code-conversion codes.

When discrepancy occurs in execution of processing of conversion for reason such as there being no conversion definition, or the collected information which is information such as registration reference number, index number, and image information, i.e., information not for conversion, in accordance with conditions set in advance, the flow controller 111 stops the processing regarding the support information (chemical substance-related information) relevant to the discrepancy. Then, the flow controller 111 stores the processing result in the storage 13. Subsequently, the flow controller 111 transmits warning information with notices of a situation of discrepancy to the client 4 of the risk manager who demanded the risk judgment.

The risk management support server 1 associates the summary information with the information not for conversion, and can provide a function that enables processing of this summary information. When the above-mentioned discrepancy occurs, in accordance with the conditions set in advance, the flow controller 111 stops the processing related to the support information (chemical substance-related information) relevant to the discrepancy. Then, the flow controller 111 performs control for acquiring the chemical substance-related information necessary for the risk judgment from the associated summary information.

Next, the flow controller 111 makes the client 4 display information for selecting a field name by which the support information of the temporary DB group 1300A is classified (S31). Thereby, for example, the field name that shows the product name is selected. The client 4 informs the flow controller 111 of the field name through the AP server 12.

The flow controller 111 classifies the support information within the temporary DB group 1300A by the content of the field name informed at S31 (S33). Then, the flow controller 111 makes the client 4 display the support information that is associated with each content and classified according to the content. For example, the flow controller 111 makes the client 4 display the support information that is associated with each product name and classified according to the product name. For example, the flow controller 111 makes the client 4 display the support information that is associated with each substance name and classified according to the substance name.

With such display, operation of a yes/no judgment as to whether to use the support information within the temporary DB group 1300A is performed in the client 4 (S35). The client 4 informs the flow controller 111 of the judgment result through the AP server 12.

The flow controller 111 returns the control to S11 when the support information within the temporary DB group 1300A is denied in the judgment result.

On the other hand, when the support information within the temporary DB group 1300A is affirmed in the judgment result, the flow controller 111 hands over the control to the risk judgment processor 114.

The risk judgment processor 114 retrieves a group made of the risk judgment setup information 1360 associated with the priority information 1357A. Then, the risk judgment processor 114 retrieves a group made of the risk judging method name 13601 associated with each piece of the risk judgment setup information 1360 within the group. Then, the risk judgment processor 114 makes the client 4 display the group made of the risk judging method name 13601 (S37). Thereby, one risk judging method name 13601 is selected. The client 4 informs the risk judgment processor 114 of the risk judging method name 13601 (referred to as a risk judging method name 13601A) through the AP server 12.

Alternatively, when the group made of a plurality of risk judging method names 13601 is retrieved in this way, which risk judging method name in the group is to be selected may be set in advance in the client 4 or the risk management support server 1, and the risk judging method name 13601 to be selected may automatically be selected.

The risk judgment processor 114 reads out the risk judgment setup information 1360 associated with the risk judging method name 13601A from the risk judgment setup information group 136.

First, the risk judgment processor 114 makes the client 4 display a judgment logical formula 13603 and a judgment result classification table 13604 that are included in the read risk judgment setup information 1360 (S39). Thereby, operation of a yes/no judgment as to whether to use the judgment logical formula 13603 and the like is performed (S41). The client 4 informs the risk judgment processor 114 of the judgment result through the AP server 12.

The risk judgment processor 114 returns the control to S37 when the judgment logical formula 13603 and the like is denied in the judgment result.

On the other hand, when the judgment logical formula 13603, and the like is affirmed in the judgment result, the risk judgment processor 114 performs the risk judgment using the judgment program 13602 within the read risk judgment setup information 1360 (S43). Then, the flow controller 111 transmits the result to the client 4, and makes the client 4 display the result.

Here, the risk judgment and display of the result will be described using two examples.

Example 1)

For example, assume a case where the element column 1356A, which is generated when generating the priority information 1357A at S13, is made of the element "destination risk" of the management risk information, the element "South Korean customs clearance" of the management range information, and the element "product definition" of the management level information that are arranged in order of hierarchy, and that each product information (referred to as product information group 1301A as a whole) of product information DB 1301 thereby generated includes product definition information, processing necessity information, and A substance discharge existence information.

Here, the product definition information is information within product definition field that is set to "1" when the product is products and articles, and is set to "0" when the product is a chemical substance.

The processing necessity information is information that is set "1" when the product needs processing, and is set to "0" when the product needs no processing.

The A substance discharge existence information is information that is set to "1" when the product discharges an A substance, and is set to "0" when the product does not discharges the A substance. The A substance is an expedient name.

It is assumed that the risk judgment setup information 1360 (referred to as risk judgment setup information 1360A) read based on the risk judging method name 13601A includes the following formula (1) (judgment logical formula 13603).

$$P1 \text{ (product definition information)} \times P2 \text{ (processing}$$

$$\text{necessity information)} \times P3 \text{ (A substance discharge existence}$$

$$\text{information)} \text{ --- (1)}$$

where P1, P2, and P3 are respectively functions, and what is shown within () is an argument. Specifically, P1(1) = 1, P1 (0) = 0, P2(1) = 2, P2(0) = 0, P3(1) = 3, and P3(0) = 0.

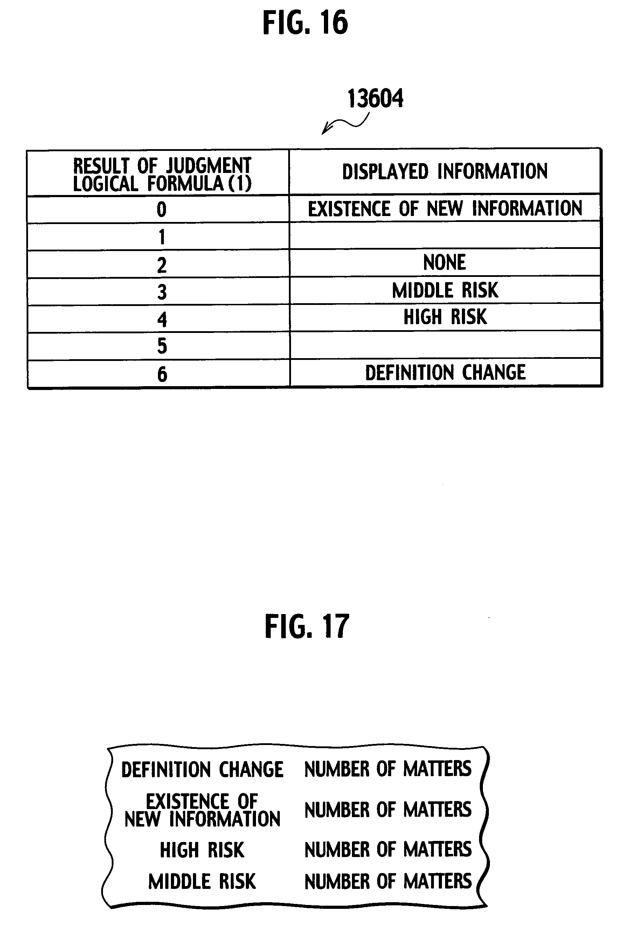

It is assumed that the risk judgment setup information 1360A includes the judgment result classification table 13604 of Fig. 16.

First, the risk judgment processor 114 calculates a result of the judgment logical formula (1) for each piece of product information of the product information group 1301A. Then, based on the judgment result classification table 13604 of Fig. 16, the risk judgment processor 114 totals the result as shown in Fig. 17, and displays the totaled result.

Example 2)

For example, assume a case where the element column 1356A, which is generated when generating the priority information 1357A at S13, is made of the element "statute risk" of the management risk information, the element "RoHS Directive" of the management range information, and the element "content ppm" of the management level information that are arranged in order of hierarchy, and that in each product information of the product information DB 1301 thereby generated (referred to as a product information group 1301B as a whole) , use information, substance type information, and substance content are recorded.

In addition, the use information is set to "3" when the product is for electrical and electronic equipment; the use information is set to "2" when the application is unknown; the use information is set to "1" when the application is exempted; the use information is set to "0" in cases other than these.

The substance type information shows a type of a substance that forms the product.

The substance content shows a content of the substance.

It is assumed that the risk judgment setup information 1360 (referred to as risk judgment setup information 1360B) read based on the risk judging method name 13601A includes a formula (2) (judgment logical formula 13603) and a formula (3) (judgment logical formulas 13603) as follows.

$$\text{Substance content} - k \text{ (substance type information)} \geq 0$$

$$\text{--- (2)}$$

where k is a function and what is shown within () is an argument. Specifically, it shows as follows.

When the substance type information shows Cd, k = 100.

When the substance type information shows Pb, k = 1000.

When the substance type information shows Cr6, k = 1000.

When the substance type information shows Hg, k= 1000.

When the substance type information shows PBB, k= 1000.

When the substance type information shows PBDEk, k= 1000.

$$0 \geq \text{(substance content} - k \text{ (substance type information))}$$

$$/ k \text{ (substance type information)} \geq -0.5 \text{ --- (3)}$$

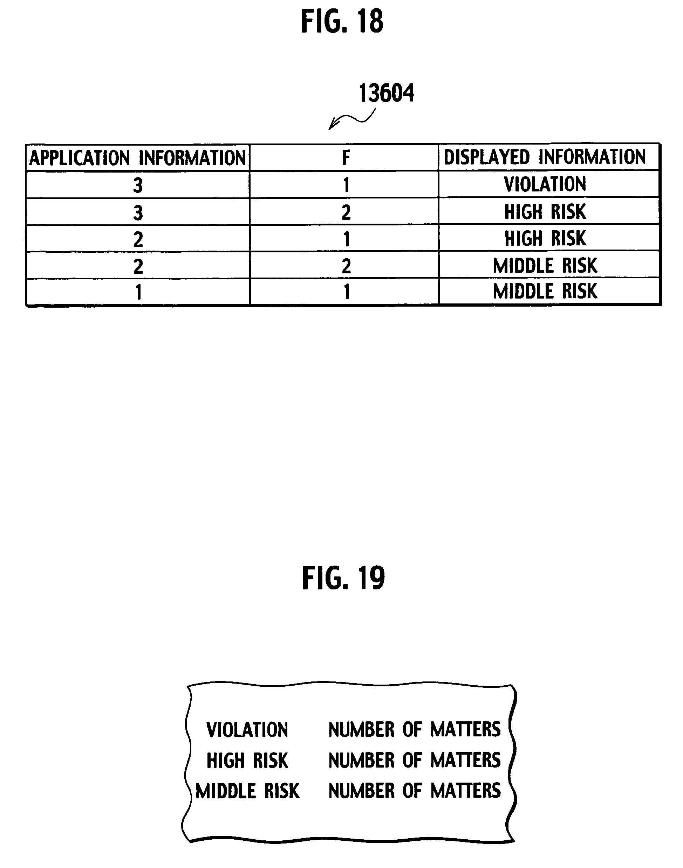

Furthermore, the risk judgment setup information 1360B includes the judgment result classification table 13604 of Fig. 18.

First, the risk judgment processor 114 determines whether each piece of the product information of the product information group 1301B satisfies the judgment logical formula (2).

When the judgment logical formula (2) is satisfied, based on the judgment result classification table 13604 of Fig. 18 (where F = 1) , the risk judgment processor 114 totals the result as shown in Fig. 19, and the totaled result is displayed.

On the other hand, when the judgment logical formula (2) is not satisfied, the risk judgment processor 114 determines whether the judgment logical formula (3) is satisfied. When the judgment logical formula (3) is satisfied, the risk judgment processor 114 totals the result based on the judgment result classification table 13604 of Fig. 18 (where, F = 2), and the totaled result is displayed.

When the totaled result is displayed as in these two examples, one element of the totaled result is selected in the client 4 and the flow controller 111 is informed of the selected result, the flow controller 111 displays the support information corresponding to the selected result out of the temporary DB group 1300A. Then, after a series of processings are completed, the flow controller 111 deletes the temporary DB group 1300A. Depending on a setting, the temporary DB group 1300A may not be deleted, and the temporary DB group 1300A may be stored and accumulated as a history, and arranged and used for other objects.

The risk management support server 1 automatically performs the processing in a management period set in advance. In short, the risk management support server 1 stores the distribution setup information 1351M, the risk judgment setup information 1360A, and the risk judgment setup information 1360B. Then, in the management period, the risk management support server 1 collects the support information from each risk management support information server 2, distributes the support information to the temporary DB group 1300A according to the distribution setup information 1351M, and performs the risk judgment based on the temporary DB group 1300A, the risk judgment setup information 1360A and the like.

Alternatively, the totaled result may be stored in the storage 13 for the user who uses the client 4 and the organization to which the user belongs, and it may be read out to be displayed or printed on demand.

In the system described above, the risk management support server 1 is set according to experiences of a risk manager with rich experiences. Thereby, a risk manager who has little experience and uses the client 4 can perform the risk management equal to the risk management performed by the risk manager with rich experiences. Changes of the distribution setup information and the like also enable execution of better risk management. Not only changes of the distribution setup information but also proper changes of the hierarchy information and the risk judgment setup information enables execution of better risk management. In other words, update of various setup information allows functional enhancement such as improved quality of the risk management, cost reduction, more prompt actions on a regular basis.

Application of the present system to job education and management education also allows improvement of the ability of the risk manager. Succession of knowledge or know-how from the risk manager with rich experiences to the risk manager with little experience, or from a risk manager of one section to a risk manager of another section is also allowed. Furthermore, by transmitting the management method through the present system, the risk management from a remote place is allowed. Simultaneously, by monitoring, correcting, and guiding a management state of a remote place, risk reduction such as auditing, self-prevention, increase in efficiency of a job and the like can be attained.

A computer program for operating computers (risk management support server 1, etc.) that form the present system may be stored in computer-readable recording media such as semiconductor memories, magnetic disks, optical disks, magneto-optical disks, and magnetic tapes, and be displayed for distribution, or the computer program may be transmitted through communication networks such as the Internet.

The present embodiment is only an exemplification, and dose not limit the scope of the present invention, and accordingly, proper changes may be added and implemented.

For example, while in the present embodiment, one piece of the mode information is given to one piece of the hierarchy information and the one piece of the hierarchy information is used when the one piece of the mode information is selected. But an alternative may be as follows.

In short, as for any one of pieces of the mode information, the piece of the mode information is given to several pieces of the hierarchy information. Information that shows a priority is given to each of the several pieces of the hierarchy information. Each piece of the hierarchy information has a configuration according to the information given to each piece of the hierarchy information. Then, the hierarchy information given of the information showing a higher priority is used with the priority.

Alternatively, for example, the distribution setup information may only be associated with the element column. In this case, the distribution setup information associated with the element column generated at Step S13 may be selected, and henceforth, this distribution setup information may be used. A portion in this distribution setup information in which a database priority and field priority not less than predetermined rank (for example, rank according to the priority parameter) are set may be used as the subsequent distribution setup information.

Also in this embodiment, the distribution setup information is generated in advance. However, when collecting and distributing the support information, the distribution setup information may be generated based on the risk judgment setup information for performing a necessary risk judgment and the distribution setup information may be used to collect and distribute the support information.

Alternatively, at least the risk judgment according to a part of a plurality of judgment logical formulas included in the risk judgment setup information may be performed.

For example, a priority may be set in those judgment logical formulas in advance, and at the time of the risk judgment, the judgment logical formula with priority larger than the threshold set in advance may be selected. When the support information necessary for the risk judgment according to the selected judgment logical formula is collected and distributed, the risk judgment according to the selected judgment logical formula may be performed using the support information.

Alternatively, when a threshold smaller than the threshold is set and a judgment logical formula having a priority set within a range determined by those two thresholds exists, the risk judgment according to the judgment logical formula may not be necessary. For example, the user may determine whether such a risk judgment is performed.

Alternatively, the support information necessary for the risk judgment according to the judgment logical formula may be collected and distributed after determination of the judgment logical formula to be used, and the risk judgment according to the judgment logical formula may be performed using the support information.

(Modification)

Next, modification of the first embodiment will be described. Here, differences from the first embodiment will be mainly described.

In this modification, a function to set the field suitable for the element column 1356, shown in Fig. 5 and the like, in the distribution setup information 1351 will be described. This function is implemented by the distribution setup information setting unit configured in the risk management support server 1. Additionally, the element column 1356 is already generated in this modification.

For each element that forms the element column 1356, the distribution setup information setting unit retrieves information (for example, judgment logical formula 13603) relevant to the element (for example, "content" considered to be important) from the storage 13, when the element is determined in advance.

First, in the information retrieved based on one element, the distribution setup information setting unit counts the number of times of use (that is, number of appearance as a candidate within the information) for each of candidates of the field determined in advance. This number of times is referred to as a point. The candidates of the field are, for example, all the fields where the support information is stored. Hereinafter, description will be performed in accordance with this example.

A coefficient according to an importance of the information retrieved (for example, importance for every formula) may be stored in advance, and the number of times of use may be multiplied by the coefficient.

For other elements, the distribution setup information setting unit performs a similar processing when the other elements are determined in advance. Different information may be retrieved in the other elements and the point may be calculated based on the different information. For example, the information displayed and the information used as well as the formula may be retrieved, and the point may be calculated based on the information.

Now, next, the distribution setup information setting unit calculates the total of the points (referred to as an estimation point) for each field.

For example, the distribution setup information setting unit stores a plurality of thresholds for the estimation point. When one estimation point is not less than the highest threshold, the distribution setup information setting unit sets the field priority 1353 on the field corresponding to the estimation point to 1 (first rank). When the estimation point is less than the highest threshold, depending on where the estimation point belongs to a plurality of ranges determined by the plurality of thresholds, the distribution setup information setting unit sets any one of the field priorities 1353, as belonging to the field corresponding to the estimation point, to a value not more than 2 (second rank).

For example, the distribution setup information setting unit calculates the total of the estimation point for each field of one database, and sets the database priority 1352 of the database depending on the total. For other databases, the distribution setup information setting unit sets the database priority 1352 in a similar manner.

Subsequently, for example, the flow controller 111 makes the client 4 display the name of the database set with the database priority 1352 from A to C and the name of the field included in the database and set with the field priority 1353 from 1 to 3. Thereby, any one of the databases and the field included in the database are selected. The client 4 informs the flow controller 111 of the selected result through the AP server 12.

The distribution setup information setting unit receives the selected result through the flow controller 111. Then, the distribution setup information setting unit generates the distribution setup information 1351 reflecting the content of the selected result, associates the distribution setup information 1351 with the original element column 1356, and stores the distribution setup information 1351 in the storage 13.

Therefore, according to this modification, the distribution setup information setting unit: retrieves the information relevant to the element column; counts the number of times of use in the information retrieved for every candidate of the field; determines the priority of the candidates based on the number of times of use; and sets the candidate selected based on the priority in the distribution setup information. Thereby, the distribution setup information suitable for the element column can be generated. In addition, a value of the risk management can be increased by using suitable distribution setup information.

Apart from this modification, the risk management support server 1 may be configured so that the distribution setup information 1351 may be shared between the users. For example, a pair of the distribution setup information 1351 and the priority information 1357, which are generated by operation that one user performs to the client 4, is managed as the information of the user.

By a request from other user, the risk management support server 1 retrieves this pair of the distribution setup information 1351 and the priority information 1357, and manages this pair as the information of these two users.

Therefore, there is no need for other user to perform operation to generate the distribution setup information 1351 and the priority information 1357, and load on the user can be reduced.

[Second embodiment]

In a second embodiment and a modification thereof, a function that supports a job in connection with the risk management support server 1 will be described. Here, differences from the first embodiment will be mainly described.

In the second embodiment and the modification thereof, a job support unit configured in the risk management support server 1 is used when implementing this function.

First, a function that supports a risk judgment job will be described.

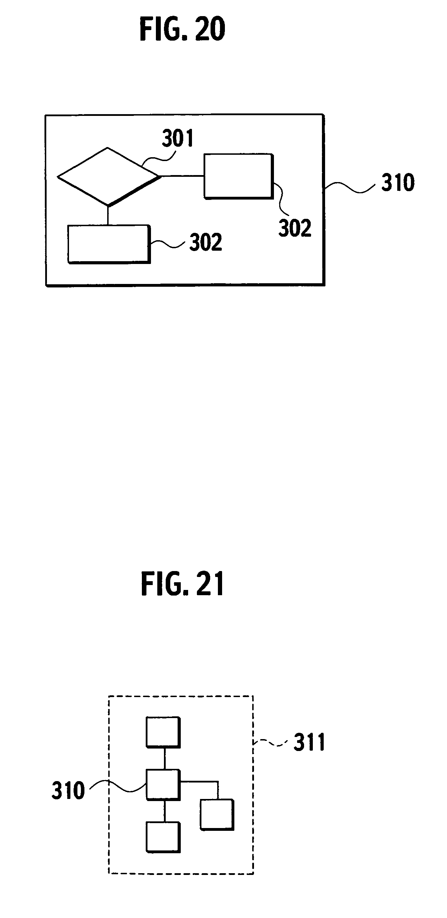

What includes at least one of a judgment definition 301 and a processing definition 302 as shown in Fig. 20 will be referred to as a pattern element 310. The judgment definition 301 is a definition on a judgment performed in the risk judgment job. The processing definition 302 is a definition on a processing performed in the risk judgment job. As shown in Fig. 21, a flow pattern 311 shows flow of the risk judgment job, and includes at least one pattern elements 310.

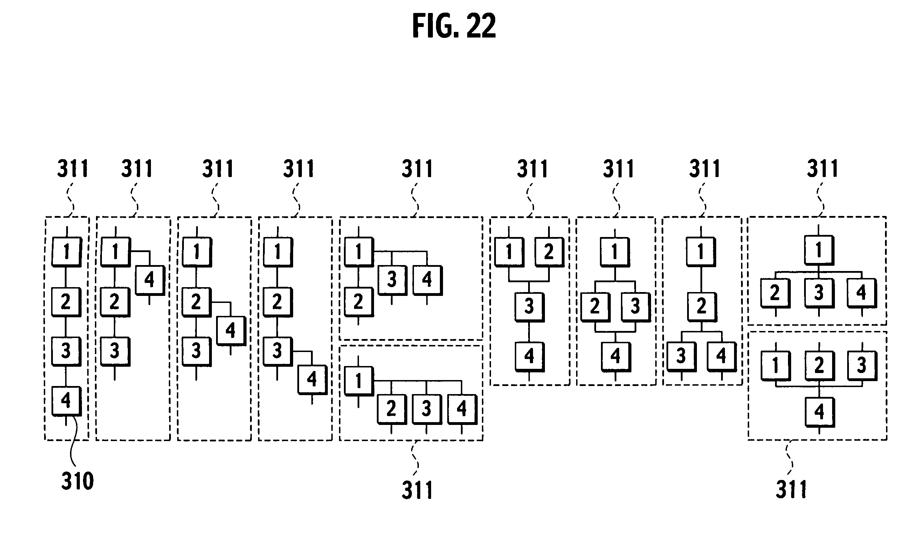

Fig. 22 is a diagram that shows a group made of the flow patterns 311 each including four pattern elements 310 therein. Contents are distinguished by a numeral written within a figure of each pattern element 310.

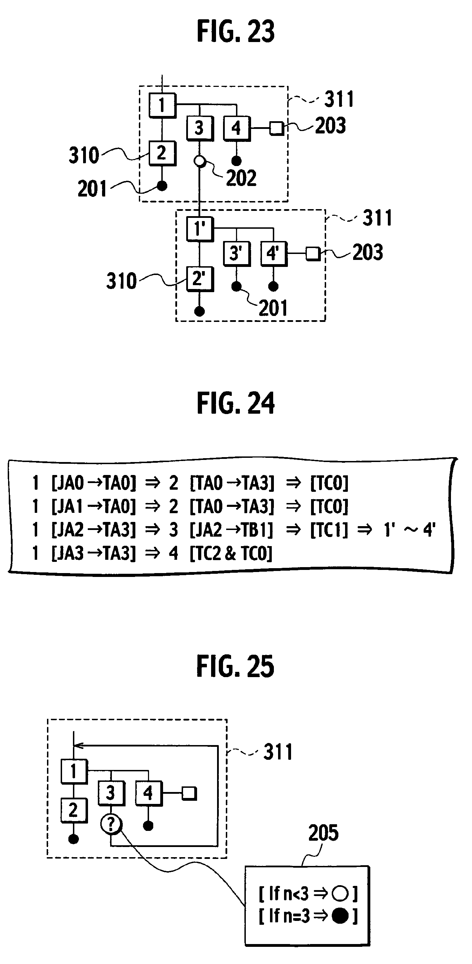

Fig. 23 is a diagram that illustrates the flow pattern used in the risk judgment job. Two flow patterns 311 are combined in this flow pattern. Fig. 24 is a diagram listing flow of a processing that may be performed according to this flow pattern.

In Fig. 23, the contents are distinguished by the numeral written within a figure of each pattern element 310. A processing definition 201 indicates stop of the processing. A processing definition 202 indicates continuation of the processing. A processing definition 203 indicates display of a warning on a screen.

For example, the pattern element with a numeral 1 written in the figure (hereinafter, referred to as pattern element (numeral 1). The same is true to other numerals) includes a judgment definition on existence of inclusion of a substance and the like, and a processing definition on a report. The judgment definition and processing definition included in each pattern element are indicated by symbols in Fig. 24.

In Fig. 24, "1" of "1 [JAO → TA0]" indicates the pattern element (numeral 1). The same is true to other pattern elements. "JA" indicates the judgment definition on existence of inclusion of substances and the like included in the pattern element (numeral 1). "TA" indicates the processing definition on a report. "TC" indicates a processing definition on the last processing.

The flow pattern of Fig. 23 can include the judgment definition on a judgment of existence of inclusion of a substance and the like in a chemical product and the like indicated by "JA" of Fig. 24, a judgment definition on a threshold judgment based on laws and regulations of a content of such a substance, and a judgment definition on a threshold judgment based on voluntary control of a content of such a substance.

In the judgment definition on the judgment of existence indicated by "JA" of Fig. 24, result values of "0" to "3" can be set to indicate four judgment results respectively. The result value "0" indicates that it is judged that a substance is contained. The result value "1" indicates that it is judged that the substance is not contained. The result value "2" indicates that it is not judged whether or not the substance is contained. The result value "3" indicates that it is judged that the substance is not a target for the judgment.

In a judgment definition on a threshold judgment, result values "0" to "3" can be set to indicate four judgment results respectively. The result value "0" indicates that a content of a substance and the like is not less than a threshold. The result value "1" indicates that the content of the substance and the like is less than the threshold. The result value "2" indicates that the result of the threshold judgment is not judged. The result value "3" indicates that it is judged that the substance is not a target for judgment.

The flow pattern of Fig. 23 includes a processing definition on report to a superior and the like indicated by "TA" of Fig. 24, a processing definition relevant to report indicated by "TB", and a processing definition on the last processing indicated by "TC."

In the processing definition on report indicated by "TA" of Fig. 24, processing values "0" to "3" can be set to indicate four processings respectively. The processing value "0" indicates a processing of entry to a table. The processing value "1" indicates a processing of display on a screen. The processing value "2" indicates a processing of making a call. The processing value "3" indicates a processing of sending an E-mail.

In the processing definition relevant to report indicated by "TB," processing values "0" and "1" can be set to indicate two processings respectively. The processing value "0" indicates that it is necessary to consult with the superior and the like. The processing value "1" indicates that an investigation is needed.

In the processing definition on the last processing indicated by "TC, processing values "0" to "2" can be set to indicate three processings respectively. The processing value "0" indicates stop of the processing. The processing value "1" indicates that the processing should be continuously performed. The processing value "2" indicates a processing of displaying a warning on a screen.

Next, operation based on the flow pattern indicated in Fig. 23 will be described.

Based on an instruction of the flow controller 111, the job support unit collaborates with the risk judgment processor 114, and performs the following.

Specifically, first, the job support unit determines existence of inclusion of a substance and the like based on the judgment definition within the pattern element (numeral 1). The job support unit performs this judgment with reference to the support information collected in advance or the processed support information collected in advance (hereinafter, referred to as secondary information).

Next, the job support unit processes based on the processing definition within the pattern element (numeral 1). The processing definition within the pattern element (numeral 1) is the processing definition on report.

In the pattern element (numeral 1), the processing value "0" is associated with the result value "0," the processing value "0" is associated with the result value "1," the processing value "3" is associated with the result value "2," and the processing value "3" is associated with the result value "3."

According to this, the job support unit calculates the result value according to an actual processing result, calculates the processing value corresponding to the actual processing result, and performs the processing according to the processing value.

In Fig. 24, "1 [JA0 → TA0] → 2" shows that when the result according to the result value "0" set in the processing definition within the pattern element (numeral 1) is obtained, the processing according to the processing value "0" associated with the result value "0" is performed, and subsequently, the control goes to the pattern element (numeral 2).

Hereinafter, the job support unit operates according to the flow pattern of Fig. 23, and thereby, can support the risk judgment job.

Here, in the storage 13, the risk management support server 1 includes: a judgment definition group including a plurality of judgment definitions; a processing definition group including a plurality of processing definitions; a pattern element group including a plurality of pattern elements; and a flow pattern group including a plurality of flow patterns.

Depending on a form of the risk judgment job, the job support unit can arbitrarily combine the judgment definition, the processing definition, the pattern element, and the flow pattern, store them, and read them out on demand to use them. In other words, based on the operation to the client 4 by the user such as a person in charge and a manager in connection with the job, that is, in response to a request from the user, the job support unit can arbitrarily combine these, store them, and read them out on demand to use them. In a similar manner, in response to a request from the user, the job support unit also can add, delete, and change the judgment definition, the processing definition, the pattern element, and the flow pattern. Therefore, flexibility of the risk judgment job can be increased and change, modification, improvement, and update of the job can be performed.

While the judgment definition on the judgment of existence of inclusion of a substance and the like is used here, by replacing this with the judgment definition on a threshold judgment based on laws and regulations of the content of a substance, the threshold judgment based on laws and regulations can be performed. The threshold judgment based on voluntary control can be performed by replacing the judgment definition on the judgment of existence of inclusion of a substance and the like with the judgment definition on the threshold judgment based on voluntary control.

As indicated in Fig. 25, the flow pattern 311 can include a conditional expression 205 such as an if-sentence. As an example, this conditional expression 205 returns to the pattern element (numeral 1) 3 times, and stops the processing at the fourth time. Therefore, the number of time of use of the same flow pattern can be reduced.

Therefore, according to the second embodiment, the job support unit performs the judgment according to the judgment definition included in the pattern element in the order of the pattern element included in the flow pattern, and simultaneously, the job support unit performs the processing according to the processing definition included in the pattern element. Thereby, a skill on the risk judgment job becomes unnecessary, and accordingly, the risk judgment job can be performed even by a person who is not an expert.

(First modification of the second embodiment)

In a first modification of the second embodiment, a job of storing data in a database included in the risk management support server 1 (hereinafter, referred to as data collection job) will be described. Here, differences from the above-mentioned second embodiment will be mainly described.

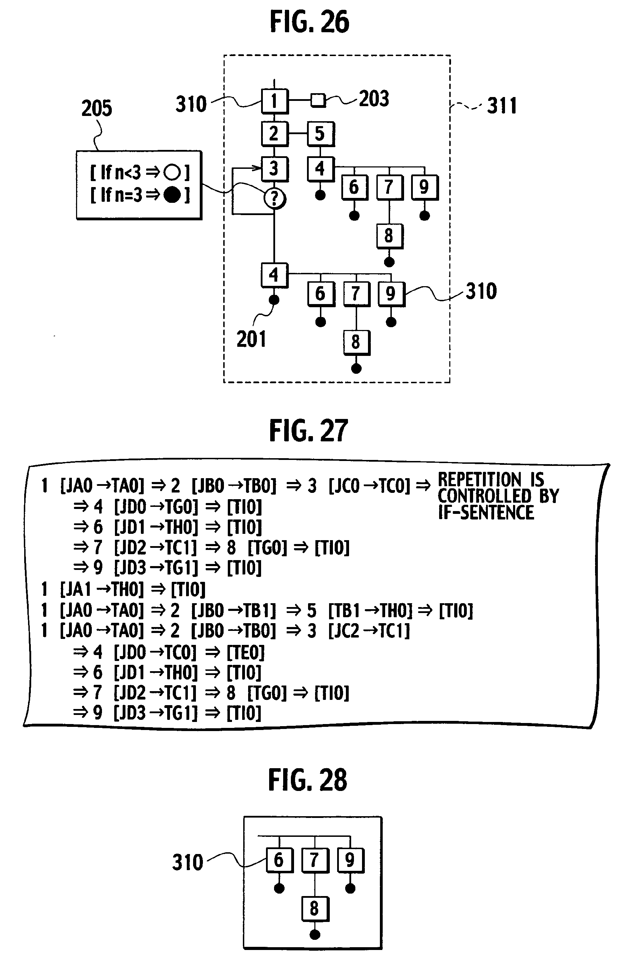

Fig. 26 is a diagram that illustrates a flow pattern used in the data collection job. Fig. 27 is a diagram listing a flow of a processing that may be performed according to this flow pattern.

In Fig. 26, contents are distinguished by a numeral written within a figure of each pattern element 310. The processing definition 201 indicates stop of the processing, and the processing definition 203 indicates display of a warning on a screen. The conditional expression 205 such as an if-sentence is included in this flow pattern, and reduction of the number of times of use of the same flow pattern is achieved.

A pattern element (numeral 1) includes a judgment definition on dictionary search. Judgment definitions and processing definitions included in each pattern element are indicated by symbols in Fig. 27.

In Fig. 27, "JA" indicates a judgment definition on dictionary search included in the pattern element (numeral 1) . "JB" indicates a judgment definition on address book search. "JC" indicates a judgment definition on a priority of a path through which the data is collected. "JD" indicates a judgment definition on a value judgment of the collected data. "TA" indicates a processing definition on processing of acquiring a representative name. "TB" indicates a processing definition on a processing of acquiring the address of a database. "TC" indicates a processing definition on a processing of acquiring a path through which the data is collected. "TD" indicates a processing definition on a processing of continuously acquiring a path through which the data is collected. "TE" indicates a processing definition on a processing of acquiring a path through which the data is collected according to a priority. "TF" indicates a processing definition on a processing of acquiring the data. "TG" indicates a processing definition on a processing of the acquired data. "TH" indicates a processing definition on a processing when abnormalities occur. "TI" indicates a processing definition on the last processing.

The flow pattern of Fig. 26 can include the judgment definition on dictionary search indicated by "JA", the judgment definition on address book search indicated by "JB", the judgment definition on a priority of a path through which the data is collected indicated by "JC,", and the judgment definition on a value judgment of the collected data indicated by "JD" of Fig. 27.

The dictionary searched in the dictionary search indicated by "JA" of Fig. 27 refers to storage that stores the conversion definitions described in the first embodiment. Specifically, the dictionary includes a plurality of groups made of a plurality of names including the representative name, and in the dictionary search, the representative name within the group including one name is retrieved.

In the judgment definition on this dictionary search, result values "0" and "1" can be set to indicate two judgment results respectively. The result value "0" indicates that it is judged that the inputted name is registered in the dictionary. The result value "1" indicates that it is judged that the name is not registered in the dictionary.

In the judgment definition on the address book search indicated by "JB" of Fig. 27, result values "0" and "1" can be set to indicate two judgment results respectively. The result value "0" indicates that it is judged that the address of the database is registered. The result value "1" indicates that it is judged that the address of the database is not registered.

The address book searched in the address book search stores information that uniquely indicates the support information stored in the risk management support information server 2 or the other system 3 (referred to as an address for convenience). The address is formed of an IP address, a database name, a port name, a column identifier and like.

In the judgment definition on the priority of the path through which the data is collected, indicated by "JC," result values "0" and "1" can be set to indicate two judgment results respectively. The result value "0" indicates that it is judged that the data is registered. The result value "1" indicates that it is judged that the data is not registered.

Though not shown, the path through which the data is collected is stored together with the priority in the storage 13 of the risk management support server 1, and the path through which the data is collected and the priority are acquired from this storage 13.

In the judgment definition on the value judgment of the collected data indicated by "JD," result values "0" to "3" can be set to indicate four judgment results respectively. The result value "0" indicates that it is judged that the data is registered. The result value "1" indicates that it is judged that the data is not registered. The result value "2" indicates that a memo registered in advance is referred to. The result value "3" indicates that an image data registered in advance is referred to.

The flow pattern of Fig. 26 can include a processing definition on the processing of acquiring the representative name registered together with the name and the like inputted in the dictionary search, indicated by "TA"; a processing definition on the processing of acquiring the address of the database in the address book search indicated by "TB"; a processing definition on the processing of acquiring the path through which the data is collected, indicated by "TC"; a processing definition on the processing of continuously acquiring the path through which the data is collected, indicated by "TD"; a processing definition on the processing of acquiring the path through which the data is collected according to the priority, indicated by "TE"; a processing definition on the processing of acquiring the data indicated by "TF"; a processing definition on the processing of the acquired data indicated by "TG"; a processing definition on the processing when abnormalities occur, indicated by "TH"; and a processing definition on the last processing indicated by "TI, " of Fig. 27.

In the processing definition on the processing of acquiring the representative name, indicated by "TA" of Fig. 27, processing values "0" and "1" can be set to indicate two processings respectively. The processing value "0" indicates the processing of acquiring the representative name. The processing value "1" indicates the processing when abnormalities occur.

In the processing definition on the processing of acquiring the address of the database, indicated by "TB," a processing value "0" can be set to indicate one processing. The processing value "0" indicates the processing of acquiring the address of the database.

In the processing definition on the processing of acquiring the path through which the data is collected, indicated by "TC", processing values "0" and "1" can be set to indicate two processings respectively. The processing value "0" indicates processing of acquiring the path having the highest priority (n = 1). The processing value "1" indicates processing of acquiring the path of which the priority is not set.

In the processing definition on the processing of continuously acquiring the path through which the data is collected, indicated by "TD, " processing values "0" and "1" can be set that indicate each two processing. A processing of acquires the path having a lower priority (n = n + 1) is indicated. The processing value "1" indicates stop of the processing.

In the processing definition on the processing of acquiring the path through which the data is collected according to the priority, indicated by "TE", a processing value "0" can be set to indicate one processing. The processing value "0" indicates processing of acquiring a series of paths through which the data is collected.

In the processing definition on the processing of acquiring the data indicated by "TF," processing values "0" to "3" can be set to indicate four processings respectively. The processing value "0" indicates a processing of acquiring the data. The processing value "1" indicates a processing of displaying a warning on a screen. The processing value "2" indicates a processing of acquiring the data. The processing value "3" indicates a processing of displaying information for urging cautions on a screen, for example, together with an image.

In the processing definition on the processing of the acquired data indicated by "TG," processing values "0" to "2" can be set to indicate three processings respectively. The processing value "0" indicates that the acquired data is to be stored in the database of the storage 13. The processing value "1" indicates a processing of displaying the acquired data on a screen. The processing value "2" indicates a processing of printing the acquired data.

In the processing definition on the processing when abnormalities occur, indicated by "TH", processing values "0" to "2" can be set to indicate three processings respectively. The processing value "0" indicates processing of displaying occurrence of abnormalities on the screen determined in advance. The processing value "1" indicates processing of making contact with a contact determined in advance that abnormalities have occurred. The processing value "2" indicates a processing of issuing an alarm.

In the processing definition on the last processing indicated by "TI," processing values "0" to "2" can be set to indicate three processings respectively. The processing value "0" indicates stop of the processing. The processing value "1" indicates that the processing should be continuously performed. The processing value "2" indicates processing of displaying a warning on a screen.

Fig. 28 is a diagram showing a part of the flow pattern shown in Fig. 26. The portion shown in Fig. 28 is separately stored in the risk management support server 1 as one flow pattern, and is used in a case of processing according to the flow pattern shown in Fig. 26. The portion shown in Fig. 28 can be also used for a job added in the future, accordingly improving flexibility in job development.

Next, operation based on the flow pattern shown in Fig. 26 will be described.

Based on an instruction of the flow controller 111, the job support unit collaborates with the data collector 112, and performs the following.

Specifically, first, the job support unit determines whether the inputted field name and the like are registered into the dictionary, based on the judgment definition within the pattern element (numeral 1).

Next, the job support unit processes based on the processing definition within the pattern element (numeral 1). The processing definitions within the pattern element (numeral 1) are the processing definition on the processing of acquiring the representative name, and the processing definition on the processing when abnormalities occur.

In the pattern element (numeral 1), the processing value "0" on the processing definition on the processing of acquiring the representative name is associated with the result value "0," and the processing value "0" on the processing definition on the processing when abnormalities occur is associated with the result value "1."

According to this, the job support unit calculates a result value according to an actual processing result, calculates the processing value corresponding to the result value, and performs the processing according to the processing value.

In Fig. 27, "1 [JA0 → TA0] → 2" shows that when a result corresponding to the result value "0" set in the processing definition within the pattern element (numeral 1) is obtained, the processing according to the processing value "0" on the processing definition on the processing of acquiring the representative name corresponded to the result value "0" is performed, and subsequently, the control moves to the pattern element (numeral 2).

Hereinafter, the job support unit can operate according to the flow pattern of Fig. 23, and thereby, can support the data collection job.

Here, in the storage 13, the risk management support server 1 includes a judgment definition group including a plurality of judgment definitions related with the data collection job, a processing definition group including a plurality of processing definitions related with the data collection job, a pattern element group including a plurality of pattern elements related with the data collection job, and a flow pattern group including a plurality of flow patterns related with the data collection job.

Depending on a form of the data collection job, the job support unit can arbitrarily combine these, store them, and read them out on demand to use them. In other words, based on operation to the client 4 according to the user such as a person in charge and a manager involved in the job, that is, in response to a request from the user, the job support unit can arbitrarily combine these, store them, and read them out on demand to use them. In a similar manner, in response to a request from the user, the job support unit can add, delete and change the judgment definitions, the processing definitions, the pattern elements, and the flow patterns. Therefore, flexibility of the data collection job can be increased, and change, modification, improvement, and update of job can be performed.

Therefore, according to modification 1 of the second embodiment, the job support unit performs the judgment according to the judgment definition included in the pattern element in the order of the pattern element included in the flow pattern, and simultaneously, the job support unit performs the processing according to the processing definition included in the pattern element. Thereby, a skill on the data collection job becomes unnecessary, and accordingly, the data collection job can be performed even by a person who is not an expert. At that time, based on the priority of the path through which the data is collected, the data can be collected through the optimal path.

(Second modification of the second embodiment)

In a second modification of the second embodiment, a job to set a disclosure right about the data in the database included in the risk management support server 1 (hereinafter, referred to as disclosure right setting job) will be described. Here, differences from the above-mentioned second embodiment will be mainly described.

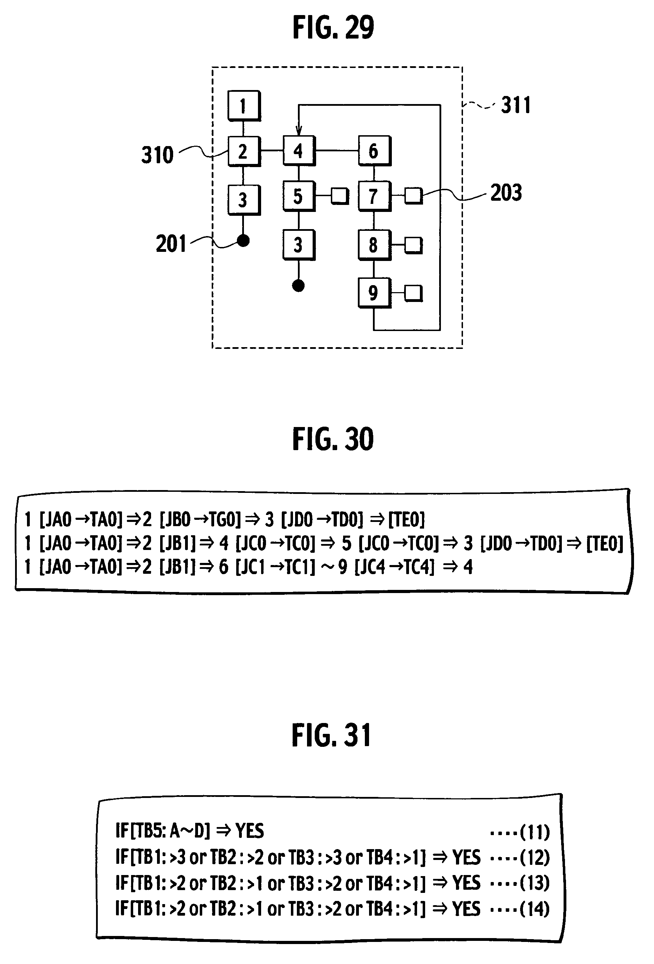

Fig. 29 is a diagram that illustrates the flow pattern used in the disclosure right setting job. Fig. 30 is a diagram listing a flow of processing that may be performed according to this flow pattern. Fig. 31 is a diagram showing a formula for calculating a level of disclosure to the user.

In Fig. 29, contents are distinguished by a numeral written within a figure of each pattern element 310. The processing definition 201 shows stop of the processing, and the processing definition 203 shows displaying a warning on a screen.

The judgment definition and processing definition included in each pattern element are shown by symbols in Fig. 30.

In Fig. 30, "JA" shows a judgment definition on retrieval of information for identifying a user (hereinafter, referred to as user ID). "JB" shows a judgment definition for retrieving a special setting. "JC0" shows a judgment definition for retrieving a right of disclosure in general. "JC1" shows a judgment definition for retrieving a level of an organization of office. "JC4" shows a judgment definition for retrieving a qualification for a project, a committee, or a workgroup. "JD" shows a judgment definition for determining a level of disclosure to the user. "TA" shows a processing definition on processing of acquiring a user ID. "TC0" shows a processing definition on a processing of setting the right of disclosure. "TC1" shows a processing definition on a processing of reconsidering the setting of the right of disclosure according to the level of the organization of office. "TC4" shows a processing definition on a processing of reconsidering the setting of the right of disclosure according to the qualification for the project, the committee, or the workgroup. "TD" shows a processing definition on a processing of saving the data. "TE" shows a processing definition on the last processing.

The flow pattern of Fig. 29 can include the judgment definition on retrieval of the user ID indicated by "JA"; the judgment definition for retrieving the special setting indicated by "JB"; the judgment definition for retrieving the right of disclosure in general indicated by "JC0"; the judgment definition for retrieving the level of the organization of office indicated by "JC1"; a judgment definition for retrieving a level of position and rank and the judgment definition for retrieving a qualification of an employee which are both omitted in Fig. 30; the judgment definition for retrieving the qualification for the project, the committee, and the workgroup indicated by "JC4"; and the judgment definition for determining the level of disclosure to the user indicated by "JD."

Although not shown, a plurality of user IDs are stored in the storage 13, and the user ID is retrieved from this.

In the storage 13 provided are: a database in which the right in connection with the disclosure right setting job is stored; a database in which the level of the organization of office is stored; a database in which the level of the position and rank is stored; a database in which the qualification of the employee is stored; and a database in which the qualification for the project and the like is stored. The processing is performed using these databases.

In each of the judgment definition on retrieval of the user ID indicated by "JA", the judgment definition for retrieving the special setting indicated by "JB," the judgment definition for retrieving the level of the organization of office indicated by "JC1," the judgment definition for retrieving the level of the position and rank, the judgment definition for retrieving the qualification of the employee, the judgment definition for retrieving the qualification for the project, the committee, and the workgroup indicated by "JC4," and the judgment definition for retrieving the level of disclosure to the user indicated by "JD" of Fig. 30, result values "0" and "1" can be set to indicate two judgment results respectively. The result value "0" indicates that it is judged that a target of retrieval is registered. The result value "1" indicates that it is judged that the target of retrieval is not registered.

In the judgment definition for retrieving the right of disclosure in general indicated by "JC0" of Fig. 30, result values "0" to "2" can be set to indicate three judgment results respectively. The result value "0" indicates that it is judged that all of the judgment definitions for retrieving the level of the organization of office, the level of the position and rank, and the qualification of the employee, as well as the qualification for the project, the committee, or the workgroup are registered. The result value "1" indicates that it is judged that a part of them are registered. The result value "2" indicates that it is judged that none of them are registered.

The flow pattern of Fig. 29 can include: a processing definition on a processing of acquiring the user ID indicated by "TA" of Fig. 30; a processing definition on the processing for performing the setting on the right of special disclosure; a processing definition on the processing of setting a right of disclosure indicated by "TC0"; a processing definition on the processing of reconsidering the setting of the right of disclosure according to the level of the organization of office indicated by "TC1"; the processing definition on the processing for reconsidering the setting of the right of disclosure according to the level of the position and rank and the processing definition on the processing for reconsidering the setting of the right of disclosure according to the qualification of the employee, both of which are omitted in Fig. 30; the processing definition on the processing for reconsidering the setting of the right of disclosure according to the qualification for the project, the committee, and the workgroup indicated by "TC4"; the processing definition on the processing of acquiring the set right of disclosure indicated by "TC"; the processing definition on the processing of saving the data indicated by "TD"; and the processing definition on the last processing indicated by "TE."

In the processing definition on the processing of acquiring the user ID indicated by "TA" of Fig. 30, processing values "0" and "1" can be set to indicate each two processings respectively. The processing value "0" indicates the processing of acquiring the user ID. The processing value "1" indicates the processing when abnormalities occur.

In the processing definition on the processing for performing the setting on the right of special disclosure, processing values "A" to "D" can be set to indicate four processings respectively. The processing values "A" to "D" each indicate the processing for reconsidering setting of providing all the rights about auditing on CSR, auditing on information management, auditing on guarantee of quality, and auditing on materials.

In the processing definition on the processing for reconsidering the setting of the right of disclosure according to the level of organization of office indicated by "TC1", processing values "1" to "10" can be set to indicate ten processings respectively. The processing values "1" to "10" indicate the processings for reconsidering the setting of the right of disclosure given to regular employee, supervisor, chief, section chief, general manager, corporate executive officer, director, auditor, president, and chairperson.

In the processing definition on the processing for reconsidering the setting of the right of disclosure according to the level of the position and rank, processing values "1" to "5" can be set to indicate five processings respectively. The processing value "1" indicates the processing for reconsidering the setting of the right of disclosure given to a group member. The processing values "2" to "5" each indicate the processing for reconsidering the setting of the right of disclosure given to a group manager, a department head, a center director, and a division general manager.

In the processing definition on the processing for reconsidering the setting of the right of disclosure according to the qualification of the employee, processing values "1" to "4" setting can be set to indicate four processings respectively. The processing values "1" to "4" each indicate the processing for reconsidering the setting of the right of disclosure given to those who work as a part-timer, those who work as a temporary staff, those approved as an equivalent to an employee, and an employee.

In the processing definition on the processing for reconsidering the setting of the right of disclosure according to the qualification for the project, the committee, and the workgroup indicated by "TC4," processing values "1" to "5" can be set to indicate five processings respectively. The processing values "1" to "5" indicate the processing for reconsidering the setting of the right of disclosure given to member of a committee, a member of a committee in charge, a secretariat, a vice-committee chair, and a committee chair.

In the processing definition on the processing of acquiring the set right of disclosure indicated by "TD," processing values "0" and "1" can be set to indicate two processings respectively. The processing value "0" indicates the processing of acquiring the set right of disclosure. The processing value "1" indicates the processing when abnormalities occur.

In the processing definition on the processing of saving the data indicated by "TD," processing values "0" and "1" can be set to indicate two processings respectively. The processing value "0" indicates the processing of saving the data. The processing value "1" indicates the processing when abnormalities occur.

In the processing definition on the last processing indicated by "TE," processing values "0" to "2" can be set to indicate three processings respectively. The processing value "0" indicates stop of the processing. The processing value "1" indicates that the processing should be continuously performed. The processing value "2" indicates the processing of displaying a warning on a screen.

In Fig. 30, a formula (11) is for setting all the rights in the setting on the right of special disclosure.

A formula (12) is for setting a right to copy an electronic file. Here it is shown that the right to copy the electronic file is set in a case of the level of the organization of office > 3 (which indicates a chief), the level of the position and rank > 2 (which indicates a group manager), the qualification of the employee > 3 (which indicates an equivalent to an employee), or the qualification for the project, the committee, or the workgroup > 1 (which indicates a member of a committee).

A formula (13) is for setting a right to print the electronic file. Here it is shown that the right to print the electronic file is set in a case of the level of the organization of office > 2 (which shows a supervisor), the level of the position and rank > 1 (which shows a group member), the qualification of the employee > 2 (which shows those who work as a temporary staff), or the qualification for the project, the committee, or the workgroup > 1 (which shows a member of a committee).

A formula (14) is for setting a right to display the electronic file. Here it is shown that the right to display the electronic file is set in case of the level of the organization of office > 2 (which shows a supervisor), the level of the position and rank > 1 (which shows a group member), the qualification of the employee > 2 (which shows those who work as a temporary staff), or the qualification for the project, the committee, or the workgroup > 1 (which shows a member of a committee).

Next, operation based on the flow pattern shown in Fig. 29 will be described.

Based on an instruction of the flow controller 111, the job support unit performs the following.

Specifically, first, the job support unit determines whether the inputted user ID is registered into the user ID group based on the judgment definition within the pattern element (numeral 1).

Next, the job support unit performs the processing based on the processing definition within the pattern element (numeral 1). The processing definition within the pattern element (numeral 1) is the processing definition on the processing of acquiring the user ID. The processing value "0" is associated with the result value "0" in the pattern element (numeral 1).

According to this, the job support unit calculates the result value according to an actual processing result, calculates a processing value corresponding to the result value, and performs the processing according to the processing value.

In Fig. 30, "1 [JA0 → TA0] → 2" shows that when a result corresponding to the result value "0" set in the processing definition within the pattern element (numeral 1) is obtained, performed is the processing according to the processing value "0" on the processing definition on the processing of acquiring the user ID associated with the result value "0", and subsequently, the control moves to the pattern element (numeral 2).

Hereinafter, the job support unit operates according to the flow pattern of Fig. 29, and thereby, can support the disclosure right setting job.

Here, in the storage 13, the risk management support server 1 includes: a judgment definition group including a plurality of judgment definitions related with the disclosure right setting job; a processing definition group including a plurality of processing definitions related with the disclosure right setting job; a pattern element group including a plurality of pattern elements related with the disclosure right setting job; and a flow pattern group including a plurality of flow patterns related with the disclosure right setting job.

Depending on a form of the disclosure right setting job, the job support unit can arbitrarily combine these, store them, and read them out on demand to use them. In other words, based on operation to the client 4 by the users such as a person in charge and a manager involved in the job, that is, in response to a request from the user, the job support unit can arbitrarily combine these, store them, and read them out on demand to use them. In a similar manner, in response to a request from the user, the job support unit can add, delete and change the judgment definition, the processing definition, the pattern element, and the flow pattern. Therefore, flexibility of the disclosure right setting job can be increased, and change, modification, improvement, and update of the job can be performed.

Therefore, according to modification 2 of the second embodiment, the job support unit performs the judgment according to the judgment definition included in the pattern element in the order of the pattern elements included in the flow pattern, and simultaneously, the processing according to the processing definition included in the pattern element is performed. Thereby, a skill on the disclosure right setting job becomes unnecessary, and accordingly, the disclosure right setting job can be performed even by a person who is not an expert.

Alternatively, a configuration on the second embodiment and the modifications thereof may be provided in a computer other than the risk management support server 1, (for example, risk management support information server 2 and the like) to support a job in connection with the computer, not limited to the risk management support.

In short, the computer may be configured to operate as the job support device in which the judgment according to the judgment definition included in the pattern element is performed in the order of the pattern element included in the flow pattern, and simultaneously, in which the processing according to the processing definition included in the pattern element is performed. Thereby, the function of the computer can be enhanced.

As for the computer program that makes the risk management support server 1 execute the processing concerning the second embodiment and the modifications thereof, that is, as for the computer program for making the computer operate as the job support device in which the judgment according to the judgment definition included in the pattern element in the order of the pattern elements included in the flow pattern is performed, and simultaneously, in which the processing according to the processing definition included in the pattern element is performed, such a computer program may be stored in computer readable recording media such as semiconductor memories, magnetic disks, optical disks, magneto-optical disks, and magnetic tapes, and be displayed and distributed, or the computer program may be transmitted through a communication network such as the Internet.

**Claims**

1. A risk management support server connected through a network to a risk management support information server including support information that supports risk management and also to a client that displays the support information, the risk management support server **characterized by** comprising:

    a distribution setup information storage that stores, in advance, distribution setup information associated with an element column in which elements are arranged in order of hierarchy, the elements selected respectively from hierarchies of hierarchy information made of elements indicating viewpoints for supporting risk management;
    an element column generating unit that generates the element column in which elements selected respectively from the hierarchies of the hierarchy information by operation in the client are arranged in order of hierarchy;
    a distribution setup information acquisition unit that reads out the distribution setup information associated with the element column from the distribution setup information storage;
    a support information collector that collects support information corresponding to the distribution setup information read out from the support information included in the risk management support information server; and
    a support information display controller that transmits the collected support information to the client and makes the client display the collected support information.

2. The risk management support server according to claim 1, **characterized by** further comprising:

    a risk judgment setting information storage that stores, in advance, risk judgment setup information associated with an element column in which elements are arranged in order of hierarchy, the elements selected respectively from hierarchies of hierarchy information made of elements indicating viewpoints for supporting risk management;
    a risk judgment setup information acquiring unit that reads the risk judgment setup information associated with the element column obtained by operation in the client, from the risk judgment setting information storage;
    a risk judgment unit that performs risk judgment using the read risk judgment setup information and the collected support information; and
    a judgment result display controller that transmits a result of the risk judgment to the client and makes the client display the result of the risk judgment.

3. The risk management support server according to any of claim 1 and 2, **characterized in that**
    in the distribution setup information, fields of a database are to be set, in which the support information to be collected by the distribution setup information is to be stored; and
    the risk management support server further comprising a distribution setup information setting unit that retrieves information relevant to the element column to be associated with this distribution setup information in setting the fields, calculates a number of times of use in the retrieved information for every candidate of the fields, determines a priority of the candidate based on the number of times of use, and sets, into the distribution setup information, the candidate selected based on the priority.

4. The risk management support server according to any one of claims 1 to 3, **characterized by** further comprising a job support unit that operates based on one flow pattern showing a flow of a job or a flow pattern formed by combining two or more of the flow patterns; **characterized in that**
    the flow pattern includes a pattern element including at least any one of a judgment definition that is a definition of judgment performed in the job and a processing definition that is a definition of a processing performed in the job; and
    the job support unit performs the judgment corresponding to the judgment definition included in the pattern element in order of the pattern element included in the flow pattern, and performs the processing corresponding to the processing definition included in the pattern element.

5. The risk management support server according to claim 4, **characterized in that** the job support unit is configured so that the flow pattern can be changed according to a request from a user involved in the job.

6. A job support device, **characterized by** comprising a job support unit that operates based on one flow pattern showing a flow of a job or a flow pattern formed by combining two or more of the flow patterns, the job support device **characterized in that** the flow pattern includes a pattern element including at least any one of a judgment definition that is a definition of judgment performed in the job and a processing definition that is a definition of a processing performed in the job; and the job support unit performs the judgment corresponding to the judgment definition included in the pattern element in order of the pattern elements included in the flow pattern, and the job support unit performs the processing corresponding to the processing definition included in the pattern element.

7. The job support device according to claim 6, **characterized in that** the job support unit is configured so that the flow pattern can be changed according to a request from a user involved in the job.

8. A computer program for causing the computer to function as a job support device, **characterized by** comprising a job support unit that operates based on one flow pattern showing a flow of a job or a flow pattern formed by combining two or more of the flow patterns; **characterized in that** the flow pattern includes a pattern element including at least any one of a judgment definition that is a definition of judgment performed in the job, and a processing definition that is a definition of a processing performed in the job; and the job support unit performs the judgment corresponding to the judgment definition included in the pattern elements in order of the pattern element included in the flow pattern, and performs the processing corresponding to the processing definition included in the pattern element.

## FIG. 1

## FIG. 2

## FIG. 3

EP 2 006 799 A2

# FIG. 4

2, 2, · · ·

21

22

23

| PRODUCT INFORMATION DB | PROCUREMENT INFORMATION DB | SHIPPING INFORMATION DB | · · · |

2000

## FIG. 5

1357

1355

PRIORITY PARAMETER | ELEMENT COLUMN

1356

SHIPPING INFORMATION    A
    DESTINATION : SOUTH KOREA    1
    CUSTOMER NAME    2
    LABEL    3
    MSDS    4

PRODUCT INFORMATION    B
    PRODUCT NAME    1
    PRODUCT DEFINITION    2
    PROCESSING NECESSITY    3
    DISCHARGE EXISTENCE    4
    CONSTITUENT    5
    INCLUSION INFORMATION    6

PROCUREMENT INFORMATION DB    C
    CONSTITUENT    1
    INCLUSION INFORMATION    2
    NON-INCLUSION GUARANTEE    3

1351a

1352    1353

135

1351

EP 2 006 799 A2

# FIG. 6

1357

1355 — PRIORITY PARAMETER | ELEMENT COLUMN — 1356

1351b

PRODUCT INFORMATION | A
   PRODUCT NAME | 1
   APPLICATION INFORMATION | 2
   EXEMPTION | 3
   PRODUCT DEFINITION | 4
   CONSTITUENT | 5
   INCLUSION INFORMATION | 6

SHIPPING INFORMATION | B
   DESTINATION : EU | 1
   CUSTOMER NAME | 2
   LABEL | 3
   MSDS | 4

PROCUREMENT INFORMATION | C
   CONSTITUENT | 1
   INCLUSION INFORMATION | 2
   NON-INCLUSION GUARANTEE | 3

1352    1353

135

1351

28

# FIG. 7

# FIG. 8

**13601**

RISK JUDGING
METHOD NAME

**13601**

RISK JUDGING
METHOD NAME

**1357**

| PRIORITY PARAMETER | ELEMENT COLUMN |
|---|---|

**1357**

| PRIORITY PARAMETER | ELEMENT COLUMN |
|---|---|

JUDGMENT
PROGRAM

~1360
~13602

JUDGMENT
LOGICAL FORMULA

~13603

JUDGMENT
PROGRAM

~1360
~13602

JUDGMENT RESULT
CLASSIFICATION
TABLE

~13604

**136**

**1360**

# FIG. 9

```
( RISK MANAGEMENT SUPPORT SERVER )～1          ( CLIENT )～4
```

S1

S3
┌─────────────────────────────┐
│ MANAGEMENT RISK INFORMATION  │
│ "DESTINATION RISK" IS SELECTED│
└─────────────────────────────┘

S5
┌─────────────────────────────┐
│ MANAGEMENT RANGE INFORMATION │
│ "SOUTH KOREAN CUSTOMS        │
│ CLEARANCE" IS SELECTED       │
└─────────────────────────────┘

S7
┌─────────────────────────────┐
│ MANAGEMENT LEVEL INFORMATION │
│ "PRODUCT DEFINITION" IS SELECTED│
└─────────────────────────────┘

S9
┌─────────────────────────────┐
│ STANDARD SETTING OR          │
│ OPTIONAL SETTING IS SELECTED │
└─────────────────────────────┘

S11

┌─────────────────────────────┐
│ PRIORITY PARAMETER IS SELECTED│
└─────────────────────────────┘

┌─────────────────────────────┐
│ ELEMENT COLUMN 1356A         │
│ AND PRIORITY INFORMATION     │～S13
│ 1357A ARE GENERATED          │
└─────────────────────────────┘

135

┌─────────────────────────────┐
│ DISTRIBUTION SETUP           │        S15
│ INFORMATION GROUP            │
└─────────────────────────────┘

S17

NO                                      ┌──────────────────┐
                                        │ YES / NO JUDGMENT │
YES                                     └──────────────────┘

YES

┌─────────────────────────────────────────────┐
│ DISTRIBUTION SETUP INFORMATION 1351M         │～S19
│ IS CHANGED                                   │
└─────────────────────────────────────────────┘
```

# FIG. 10

Diagram elements:

- RISK MANAGEMENT SUPPORT INFORMATION SERVER  ~2,2,···
- RISK MANAGEMENT SUPPORT SERVER  ~1
- CLIENT  4

- 1300A
- 2000
- S23
- S27
- S25

- S21 → SELECTION OF PRODUCT GROUP NAME
- S31 → FIELD NAME "PRODUCT NAME" IS SELECTED
- S33 → CLASSIFICATION
- S35 → YES / NO JUDGMENT
- S37 → RISK JUDGING METHOD NAME IS SELECTED
- S39 NO / YES → YES / NO JUDGMENT  S41
- S43 → RISK JUDGMENT

**FIG. 11**

PRODUCT INFORMATION

    PRODUCT NAME
    PRODUCT DEFINITION
    CONSTITUENT


PROCUREMENT INFORMATION

    CONSTITUENT
    INCLUSION INFORMATION
    NON-INCLUSION GUARANTEE

~1351M

**FIG. 12**

PRODUCT INFORMATION

    PRODUCT NAME
    PRODUCT DEFINITION
    CONSTITUENT
    INCLUSION INFORMATION


PROCUREMENT INFORMATION

    CONSTITUENT
    INCLUSION INFORMATION
    NON-INCLUSION GUARANTEE

~1351M

ADDED

**FIG. 13**

PRODUCT INFORMATION

    PRODUCT NAME
    PRODUCT DEFINITION
    CONSTITUENT


PROCUREMENT INFORMATION

    CONSTITUENT
    INCLUSION INFORMATION

~1351M

DELETED

## FIG. 14

PRODUCT INFORMATION
    PRODUCT NAME
    PRODUCT DEFINITION
    CONSTITUENT           ~1351M

PROCUREMENT INFORMATION
   CONSTITUENT
   INCLUSION INFORMATION
   NON-INCLUSION GUARANTEE

SHIPPING INFORMATION       ADDED
   DESTINATION : SOUTH KOREA
   CUSTOMER NAME
   LABEL

## FIG. 15

PRODUCT INFORMATION
    PRODUCT NAME
    PRODUCT DEFINITION
    CONSTITUENT          ~1351M

                 DELETED

# FIG. 16

13604

| RESULT OF JUDGMENT LOGICAL FORMULA (1) | DISPLAYED INFORMATION |
|---|---|
| 0 | EXISTENCE OF NEW INFORMATION |
| 1 | |
| 2 | NONE |
| 3 | MIDDLE RISK |
| 4 | HIGH RISK |
| 5 | |
| 6 | DEFINITION CHANGE |

# FIG. 17

| DEFINITION CHANGE | NUMBER OF MATTERS |
|---|---|
| EXISTENCE OF NEW INFORMATION | NUMBER OF MATTERS |
| HIGH RISK | NUMBER OF MATTERS |
| MIDDLE RISK | NUMBER OF MATTERS |

# FIG. 18

13604

| APPLICATION INFORMATION | F | DISPLAYED INFORMATION |
|---|---|---|
| 3 | 1 | VIOLATION |
| 3 | 2 | HIGH RISK |
| 2 | 1 | HIGH RISK |
| 2 | 2 | MIDDLE RISK |
| 1 | 1 | MIDDLE RISK |

# FIG. 19

VIOLATION     NUMBER OF MATTERS

HIGH RISK     NUMBER OF MATTERS

MIDDLE RISK     NUMBER OF MATTERS

# FIG. 20

# FIG. 21

# FIG. 22

# FIG. 23

# FIG. 24

1  [JA0→TA0]  ⇒  2  [TA0→TA3]  ⇒  [TC0]
1  [JA1→TA0]  ⇒  2  [TA0→TA3]  ⇒  [TC0]
1  [JA2→TA3]  ⇒  3  [JA2→TB1]  ⇒  [TC1]  ⇒  1' ～ 4'
1  [JA3→TA3]  ⇒  4  [TC2 & TC0]

# FIG. 25

[ If n<3 ⇒ ○ ]
[ If n=3 ⇒ ● ]

## FIG. 26

## FIG. 27

```
1 [JA0 →TA0] ⇒ 2 [JB0 →TB0] ⇒ 3 [JC0 →TC0] ⇒   REPETITION IS
    ⇒ 4 [JD0 →TG0] ⇒ [TI0]                      CONTROLLED BY
    ⇒ 6 [JD1 →TH0] ⇒ [TI0]                      IF-SENTENCE
    ⇒ 7 [JD2 →TC1] ⇒ 8 [TG0] ⇒ [TI0]
    ⇒ 9 [JD3 →TG1] ⇒ [TI0]
1 [JA1 →TH0] ⇒ [TI0]
1 [JA0 →TA0] ⇒ 2 [JB0 →TB1] ⇒ 5 [TB1 →TH0] ⇒ [TI0]
1 [JA0 →TA0] ⇒ 2 [JB0 →TB0] ⇒ 3 [JC2 →TC1]
    ⇒ 4 [JD0 →TC0] ⇒ [TE0]
    ⇒ 6 [JD1 →TH0] ⇒ [TI0]
    ⇒ 7 [JD2 →TC1] ⇒ 8 [TG0] ⇒ [TI0]
    ⇒ 9 [JD3 →TG1] ⇒ [TI0]
```

## FIG. 28

# FIG. 29

# FIG. 30

1 [JA0 →TA0] ⇒ 2 [JB0 →TG0] ⇒ 3 [JD0 →TD0] ⇒ [TE0]
1 [JA0 →TA0] ⇒ 2 [JB1] ⇒ 4 [JC0 →TC0] ⇒ 5 [JC0 →TC0] ⇒ 3 [JD0 →TD0] ⇒ [TE0]
1 [JA0 →TA0] ⇒ 2 [JB1] ⇒ 6 [JC1 →TC1] ～ 9 [JC4 →TC4] ⇒ 4

# FIG. 31

IF [TB5: A～D] ⇒ YES                                          ‥‥(11)
IF [TB1: >3 or TB2 : >2 or TB3 : >3 or TB4 : >1] ⇒ YES ‥‥(12)
IF [TB1: >2 or TB2 : >1 or TB3 : >2 or TB4 : >1] ⇒ YES ‥‥(13)
IF [TB1: >2 or TB2 : >1 or TB3 : >2 or TB4 : >1] ⇒ YES ‥‥(14)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003141344 A

- JP 2005157824 A